# EUROPEAN PATENT APPLICATION

(11) **EP 4 679 608 A1**
(43) Date of publication of application: **14.01.2026**
(21) Application number: 23932793.5
(22) Date of filing: 21.11.2023
(51) Int. Cl.: H01M 50/409, H01M 50/40, H01M 10/058

(54) **BATTERY CELL, BATTERY AND ELECTRIC DEVICE**

(30) Priority: 13.04.2023 CN 202310392636
(71) Applicant: Contemporary Amperex Technology Co., Limited, Ningde, Fujian 352100 (CN)
(72) Inventor: XIAO, Dejun, Ningde, Fujian 352100 (CN); HE, Jianfu, Ningde, Fujian 352100 (CN); SUN, Xueyang, Ningde, Fujian 352100 (CN); LIN, Chenhui, Ningde, Fujian 352100 (CN); WANG, Shaoshan, Ningde, Fujian 352100 (CN); YE, Yonghuang, Ningde, Fujian 352100 (CN)
(74) Representative: Ziebig Hengelhaupt Intellectual Property Attorneys Patentanwaltskanzlei PartGmbB
(86) International application number: PCT/CN2023/133096
(87) International publication number: WO 2024/212522

(57) **Abstract**

The present application discloses a battery cell, a battery, and an electric apparatus. The battery cell includes a housing, an electrode assembly, and an insulator. The housing has a mounting cavity; the electrode assembly is disposed in the mounting cavity; the insulator includes a buffer body and an insulating body that are disposed in the mounting cavity, the insulating body enveloping the electrode assembly, and the buffer body being located between the electrode assembly and the housing; and the buffer body and the insulating body are connected to form an integral structure. This integral structure can be directly assembled with the electrode assembly to achieve envelopment of the electrode assembly, which eliminates the step of separately assembling the buffer body, reduces the number of assembly steps and the number of assembled components, and facilitates the improvement of assembly efficiency of the battery cell. Additionally, fewer assembly steps facilitate automated production, enhancing the production efficiency of the battery cell.

## Description

The present application claims priority to Chinese Patent Application No. 202310392636.4, filed on April 13, 2023, with the invention title "BATTERY CELL, BATTERY, AND ELECTRIC APPARATUS," which is incorporated herein by reference in its entirety.

### TECHNICAL FIELD

The present application relates to the field of battery insulation technologies, and more particularly, to a battery cell, a battery, and an electric apparatus.

### BACKGROUND

With the development of science and technology, batteries have been widely applied in fields such as consumer electronics, electric vehicles, distributed power supply systems based on solar and wind energy, grid peak shaving, backup power, green buildings, portable medical electronic devices, industrial control, aerospace, robotics, and national security.

A battery typically includes one or more battery cells. However, in the assembly steps of battery cells, the assembly operations for buffer and insulation components within the battery cell are complex, resulting in low assembly efficiency, which affects the production efficiency of batteries.

The above statements are provided solely to offer background information related to the present application and do not necessarily constitute prior art.

### SUMMARY

The purpose of the embodiments of the present application is to provide a battery cell, a battery, and an electric apparatus, including but not limited to improving the assembly efficiency of buffer and insulation components during the manufacturing process of the battery cell.

The technical solutions adopted by the embodiments of the present application are as follows:
According to a first aspect, a battery cell is provided, where the battery cell includes a housing, an electrode assembly, and an insulator. The housing has a mounting cavity; the electrode assembly is disposed in the mounting cavity; the insulator includes a buffer body and an insulating body that are disposed in the mounting cavity, the insulating body enveloping the electrode assembly, and the buffer body being located between the electrode assembly and the housing; and the buffer body and the insulating body are connected to form an integral structure.

In the battery cell of the embodiments of the present application, during swelling of the electrode assembly, an outer wall of the electrode assembly swells toward the housing, and the buffer body, located between the electrode assembly and the housing, is elastically deformed by the swelling of the electrode assembly, whereby the elastic deformation of the buffer body can cushion the swelling of the electrode assembly, thereby mitigating the swelling force of the electrode assembly, reducing the risk of wrinkling and lithium precipitation in the electrode assembly, and improving the reliability and cycle life of the battery cell. Additionally, during the assembly process of the battery cell, the insulating body and the buffer body are connected to form an integral structure. This integral structure can be directly assembled with the electrode assembly to achieve envelopment of the electrode assembly, which eliminates the step of separately assembling the buffer body, reduces the number of assembly steps and the number of assembled components, and facilitates the improvement of assembly efficiency of the battery cell. Furthermore, fewer assembly steps also facilitate automated production, enhancing the production efficiency of the battery cell.

In one embodiment, the buffer body is disposed between the housing and a sidewall of the electrode assembly.

In the battery cell of the embodiments of the present application, the swelling of the electrode assembly primarily occurs at the sidewall of the electrode assembly. The sidewall of the electrode assembly swells and compresses the buffer body to deform, so that the buffer body can mitigate the swelling force at the primary location of the electrode assembly, and has a good effect of reducing the risk of wrinkling and lithium precipitation in the electrode assembly.

In one embodiment, the sidewall of the electrode assembly includes a large face, the buffer body includes a large-face buffer portion, and the large-face buffer portion covers the large face.

In the battery cell of the embodiments of the present application, during the charging and discharging process of the electrode assembly, the large face exhibits the most significant swelling, and the large face swells and compresses the large-face buffer portion to deform, mitigating the swelling force of the large face. Thus, the large-face buffer portion can effectively mitigate the swelling force at the most prominent location of the electrode assembly, thereby reducing the risk of wrinkling and lithium precipitation in the electrode assembly.

In one embodiment, an area of the large face is S₁, an area of the large-face buffer portion is S₂, and 0.8S₁ ≤ S₂ ≤ 1.055₁.

In the battery cell of the embodiments of the present application, through the design of 0.8S₁ ≤ S₂ ≤ 1.05S₁, the large-face buffer portion can cover most of the region of the large face, thereby better mitigating the swelling force of the large face, and more effectively reducing the risk of wrinkling and lithium precipitation in the electrode assembly. Additionally, the area of the large-face buffer portion is not designed to be excessively large, which is conducive to increasing the energy density of the battery cell.

In one embodiment, a thickness of the electrode assembly is H₁, a thickness of the large-face buffer portion is H₂, and 0.05 mm ≤ H₂ ≤ 0.6H₁.

In the battery cell of the embodiments of the present application, through the setting of 0.05 mm ≤ H₂ ≤ 0.6H₁, the thickness of the large-face buffer portion is reasonably set, so that the large-face buffer portion can effectively mitigate the swelling force of the large face, which is also conducive to reducing material usage and lowering manufacturing costs. In addition, the space occupied by the large-face buffer portion in the mounting cavity is reasonable, which is conducive to increasing the energy density of the battery cell.

In one embodiment, 0.2 mm ≤ H₂ ≤ 0.3H₁.

In the battery cell of the embodiments of the present application, through the setting of 0.2 mm ≤ H₂ ≤ 0.3H₁, the thickness of the large-face buffer portion is more reasonably set, so that the large-face buffer portion can more effectively mitigate the swelling force of the large face, which is further conducive to reducing material usage and lowering manufacturing costs. In addition, the space occupied by the large-face buffer portion in the mounting cavity is reasonable, which is conducive to increasing the energy density of the battery cell.

In one embodiment, a surface of the large-face buffer portion facing the large face is configured with an arcuate surface for fitting with the large face.

In the battery cell of the embodiments of the present application, the arcuate surface can fit with the large face, so that the large-face buffer portion can effectively mitigate the swelling force of the large face, which is conducive to reducing the risk of wrinkling in the electrode assembly and improving the cycle service life of the battery cell.

In one embodiment, under a condition that a pressure P is applied along a thickness direction of the large-face buffer portion, a thickness deformation amount of the large-face buffer portion is a, a thickness of the large-face buffer portion before being subjected to the pressure is b, and c = a/b, where when 0.001 MPa ≤ P ≤ 0.05 MPa, 0.5% ≤ c ≤ 60%; and when P ≥ 1.2 MPa, c ≥ 80%.

In the battery cell of the embodiments of the present application, by defining the relationship between the applied force and the deformation amount of the large-face buffer portion, the large-face buffer portion can match the swelling force of the electrode assembly throughout its lifecycle, which can effectively mitigate the swelling force of the electrode assembly, improve wrinkling in the electrode assembly, and enhance the cycling capability of the electrode assembly.

In one embodiment, the insulating body includes a large-face region, the large-face region covers the large face, and the large-face buffer portion is connected to the large-face region.

In the battery cell of the embodiments of the present application, the large-face region can separate the large face from the housing, so that the large face of the electrode assembly can be insulated from the housing, reducing the risk of short circuits.

In one embodiment, the insulator is configured with first through-holes penetrating the large-face region and the large-face buffer portion, the first through-holes enabling an electrolyte to flow to the large face.

In the battery cell of the embodiments of the present application, the electrolyte within the battery cell can pass through the first through-holes, traversing the large-face region and the large-face buffer portion to reach the large face of the electrode assembly, replenishing the large face of the electrode assembly with the electrolyte, reducing the risk of loss of continuity during the swelling of the electrode assembly, and facilitating the extension of service life of the battery cell.

In one embodiment, the number of the first through-holes is N₁, a cross-sectional area of the first through-holes is S₃, an area of the large-face buffer portion is S₂, and N₁×S₃ ≤ 0.1S₂.

In the battery cell of the embodiments of the present application, through the design of N₁×S₃ ≤ 0.1S₂, a ratio of the total cross-sectional area of the first through-holes to the area of the large-face buffer portion is less than 0.1, meaning the first through-holes occupy a small portion of the large-face buffer portion, resulting in a small proportion of a hollowed-out region on the large-face buffer portion. This enables the large-face buffer portion to provide a good buffering effect for the electrode assembly, and can also reduce polarization differences in the large face due to uneven buffering, thereby improving the cycling performance of the battery cell.

In one embodiment, the sidewall of the electrode assembly further includes a side face adjacent to the large face, the buffer body further includes a side-face buffer portion, and the side-face buffer portion covers the side face.

In the battery cell of the embodiments of the present application, during the charging and discharging process of the electrode assembly, the side face swells and compresses the side-face buffer portion to deform, thereby mitigating the swelling force of the side face and reducing the risk of wrinkling and lithium precipitation in the electrode assembly.

In one embodiment, a surface of the side-face buffer portion facing the side face is configured with an accommodating groove for accommodating the side face, and a groove wall of the accommodating groove is capable of fitting with the side face.

In the battery cell of the embodiments of the present application, under a condition that the side face swells, the side face fits against the groove wall of the accommodating groove. In this way, the side-face buffer portion can mitigate the swelling force across the entire surface of the side face, which is conducive to reducing the risk of wrinkling and lithium precipitation at the side face of the electrode assembly.

In one embodiment, a thickness of the large-face buffer portion is greater than a thickness of the side-face buffer portion.

In the battery cell of the embodiments of the present application, designing buffer portions with different thicknesses for different regions allows for efficient use of the space in the mounting cavity, which is conducive to increasing the energy density of the battery cell and reducing manufacturing costs.

In one embodiment, the insulating body further includes a side-face region, the side-face region covers the side face, and the side-face buffer portion is connected to the side-face region.

In the battery cell of the embodiments of the present application, the side-face region can separate the side face from the housing, so that the side face of the electrode assembly can be insulated from the housing, reducing the risk of short circuits.

In one embodiment, the sidewall of the electrode assembly includes two side faces, the large face is provided in two, the two large faces are located on opposite sides of the electrode assembly, and the two side faces are located on another pair of opposite sides of the electrode assembly; and the insulating body further includes a bottom-face region and two side-face regions, the large-face region is provided in two, the two large-face regions respectively cover the two large faces, the two side-face regions respectively cover the two side faces, and the bottom-face region covers a bottom face of the electrode assembly.

In the battery cell of the embodiments of the present application, the two large-face regions and the two side-face regions can completely cover the sidewall of the electrode assembly, and the bottom-face region covers the bottom face of the electrode assembly, thereby fully insulating the electrode assembly from the housing.

In one embodiment, a width of the side-face region is E₁, a thickness of the electrode assembly is H₁, the number of electrode assemblies enveloped within the insulator is N₂, a sum of thicknesses of all large-face buffer portions located between the two large-face regions is A, and a thickness of the large-face region is H₃, where N₂×H₁ < E₁ ≤ 1.05×N₂×H₁ + A + 2H₃; or when N₂ ≥ 2, the buffer body further includes intermediate buffer portions, with each intermediate buffer portion located between two adjacent electrode assemblies, a sum of thicknesses of all intermediate buffer portions is B, where N₂×H₁ < E₁ ≤ 1.05×N₂×H₁ + A + B + 2H₃.

In the battery cell of the embodiments of the present application, adopting the above technical solution ensures sufficient space between the two large-face regions to accommodate the electrode assembly, and can also provide support to the battery cell, enabling the electrode assembly to be stably enveloped within the insulator.

In one embodiment, a length of the bottom-face region is E₂, a width of the electrode assembly is L₁, a thickness of the side-face region is H₄, and L₁ < E₂ ≤ 1.05L₁ + 2H₄.

In the battery cell of the embodiments of the present application, adopting the above technical solution ensures sufficient space between the two side-face regions to accommodate the electrode assembly, and the two side-face regions can also support the two sides of the electrode assembly, enabling the electrode assembly to be stably enveloped within the insulator.

In one embodiment, the housing includes a shell and an end cover, the end cover covering an opening of the shell and forming the mounting cavity together with the shell; and the insulating body further includes a first top-face portion configured to connect with the end cover and connect with the large-face region, where the number of electrode assemblies enveloped within the insulator is N₂, a width of the first top-face portion is E₃, a thickness of the electrode assembly is H₁, and 0.1×N₂×H₁ ≤ E₃ ≤ 0.5×N₂×H₁.

In the battery cell of the embodiments of the present application, by adopting the above technical solution, the first top-face portion has a certain area for connection with the end cover, enabling a secure connection between the end cover and the first top-face portion, allowing the insulator to be stably fixed within the shell, thereby improving the cycle stability and reliability of the battery cell. Additionally, the width of the first top-face portion is not designed to be too wide, avoiding redundancy.

In one embodiment, at least one of the bottom-face region, the side-face region, and the large-face region is covered with a functional layer for enhancing the performance of the battery cell.

In the battery cell of the embodiments of the present application, the functional layer can enhance the performance of the battery cell.

In one embodiment, the functional layer includes a thermally conductive layer, the thermally conductive layer covering the bottom-face region; and/or the thermally conductive layer covering the large-face region.

In the battery cell of the embodiments of the present application, the thermally conductive layer covers the bottom-face region, which can improve heat dissipation at the bottom of the electrode assembly, and reduce the risk of thermal failure in the battery cell. When multiple battery cells are assembled into a battery pack, the thermally conductive layer is located between two adjacent battery cells. The thermally conductive layer can accelerate heat conduction between the two adjacent battery cells, and reduce the temperature difference between them. This helps to improve the temperature consistency of the grouped battery cells, facilitates system thermal management of the battery cells, and prolongs the service life of the battery cells.

In one embodiment, the functional layer further includes a thermal insulation layer, the thermal insulation layer covering the large-face layer.

In the battery cell of the embodiments of the present application, the large face is covered with the thermal insulation layer, the thermal insulation layer can block the heat generated by the electrode assembly from being transferred outward. This helps to control the spread of heat after thermal runaway of a single battery cell, reduces the risk of thermal failure in other battery cells triggered by the thermal failure of a single battery cell, and improves the reliability of grouped battery cells.

In one embodiment, the side-face region is configured with second through-holes, the second through-holes enabling an electrolyte to flow to the side face; and/or the bottom-face region is configured with third through-holes, the third through-holes enabling an electrolyte to flow to the bottom face of the electrode assembly.

In the battery cell of the embodiments of the present application, the electrolyte can pass through the second through-holes to traverse the side-face region, and the electrolyte can also pass through the third through-holes to traverse the bottom-face region, replenishing the electrode assembly with the electrolyte, reducing the risk of loss of continuity in the electrode assembly, and improving the service life of the battery cell.

In one embodiment, the buffer body further includes an intermediate buffer portion, the number of electrode assemblies is multiple, the multiple electrode assemblies are stacked along a thickness direction of the electrode assembly to form an electrode module, the insulating body envelops the electrode module, and the intermediate buffer portion is disposed between two adjacent electrode assemblies.

In the battery cell of the embodiments of the present application, the intermediate buffer portion is disposed between two adjacent electrode assemblies, and the sidewalls of the two adjacent electrode assemblies swell and compress the intermediate buffer portion from opposite sides to deform, whereby the intermediate buffer portion can mitigate the swelling force of the two adjacent electrode assemblies, further reducing the risk of wrinkling and lithium precipitation in the electrode assemblies.

In one embodiment, at least one edge of the intermediate buffer portion is connected to the insulating body.

In the battery cell of the embodiments of the present application, the edge of the intermediate buffer portion is connected to the insulating body, resulting in a simple structure for the insulator and ease of manufacturing.

In one embodiment, multiple intermediate buffer portions are disposed between two adjacent electrode assemblies, and the multiple intermediate buffer portions are stacked along the thickness direction of the electrode assembly.

In the battery cell of the embodiments of the present application, the multiple intermediate buffer portions are stacked along the thickness direction of the electrode assembly, allowing the swelling of two adjacent electrode assemblies to be buffered by the multiple intermediate buffer portions, resulting in a better buffering effect for the electrode assemblies, which is conducive to reducing the risk of wrinkling and lithium precipitation in the electrode assemblies.

In one embodiment, the intermediate buffer portions are sequentially connected such that the stacked multiple intermediate buffer portions are capable of being unfolded; the insulating body includes a first insulating portion and a second insulating portion, the first insulating portion and the second insulating portion respectively covering two adjacent electrode assemblies; and when the multiple intermediate buffer portions are in an unfolded state, a first one of the intermediate buffer portions is connected to the first insulating portion, a last one of the intermediate buffer portions is connected to the second insulating portion, and the first insulating portion and the second insulating portion are capable of moving away from each other as the multiple intermediate buffer portions are unfolded.

In the battery cell of the embodiments of the present application, the stacked multiple intermediate buffer portions can be unfolded, facilitating the storage and accommodation of the insulator.

In one embodiment, the insulating body includes multiple third insulating portions located between two adjacent electrode assemblies, the multiple third insulating portions are stacked along the thickness direction of the electrode assembly, the third insulating portions are sequentially connected such that the stacked multiple third insulating portions are capable of being unfolded, and at least one of the third insulating portions is connected to the intermediate buffer portion.

In the battery cell of the embodiments of the present application, the third insulating portions are disposed between two adjacent electrode assemblies. The third insulating portions can insulate the two adjacent electrode assemblies, reducing the risk of short circuits. The unfolding of the multiple stacked third insulating portions drives the intermediate buffer portion connected to the third insulating portion to flatten, thereby enabling the unfolding of the insulator to facilitate the storage of the insulator.

In one embodiment, a surface of the insulating body facing the electrode assembly is connected to the buffer body; and/or a surface of the insulating body facing away from the electrode assembly is connected to the buffer body.

In the battery cell of the embodiments of the present application, the connection between the insulating body and the buffer body is simple, facilitating processing.

In one embodiment, the buffer body and the insulating body form an integrated structure; or the buffer body is adhered to the insulating body; or the buffer body is connected to the insulating body by thermal pressing.

In the battery cell of the embodiments of the present application, the connection between the buffer body and the insulating body is simple, and manufacturing of the two is convenient and straightforward.

According to a second aspect, a battery is provided, including the above-described battery cell.

In the battery of the embodiments of the present application, by adopting the above-described battery cell, the battery cell has high reliability and cycle life, which is conducive to improving the service life and performance of the battery, and the battery cell has high production efficiency, which is conducive to reducing the manufacturing cost of the battery.

According to a third aspect, an electric apparatus is provided, including the above-described battery.

In the electric apparatus of the embodiments of the present application, by adopting the above-described battery, the battery has a long service life, which is conducive to improving the performance of the electric apparatus, and the battery has low manufacturing cost, which is also conducive to reducing the manufacturing cost of the electric apparatus.

### BRIEF DESCRIPTION OF DRAWINGS

To more clearly illustrate the technical solutions in the embodiments of the present application, the drawings required for use in the description of the embodiments or the prior art are briefly introduced below. It is apparent that the drawings described below are merely some embodiments of the present application, and those of ordinary skill in the art can obtain other drawings based on these drawings without creative effort.
FIG. 1 is a schematic structural diagram of a vehicle according to an embodiment of the present application.
FIG. 2 is a schematic exploded view of a battery according to an embodiment of the present application.
FIG. 3 is a schematic exploded view of a battery cell according to an embodiment of the present application.
FIG. 4 is a schematic structural diagram of an electrode assembly of a battery cell according to an embodiment of the present application.
FIG. 5 is a schematic structural diagram of an insulator in a folded state according to an embodiment of the present application.
FIG. 6 is a schematic structural diagram of the insulator shown in FIG. 5 in an unfolded state from one perspective.
FIG. 7 is a schematic structural diagram of the insulator shown in FIG. 5 in an unfolded state from another perspective.
FIG. 8 is a cross-sectional view along line A-A in FIG. 7.
FIG. 9 is a partial enlarged view at B in FIG. 8.
FIG. 10 is a schematic cross-sectional view of an insulator according to another embodiment of the present application.
FIG. 11 is a schematic structural diagram of an insulator according to yet another embodiment of the present application.
FIG. 12 is a schematic structural diagram of an insulator in a folded state according to yet another embodiment of the present application.
FIG. 13 is a schematic structural diagram of the insulator shown in FIG. 12 in an unfolded state from one perspective.
FIG. 14 is a schematic structural diagram of the insulator shown in FIG. 13 in an unfolded state from another perspective.
FIG. 15 is a schematic structural diagram of an insulator in a folded state enveloping an electrode assembly according to yet another embodiment of the present application.
FIG. 16 is a schematic cross-sectional view of the insulator shown in FIG. 15 in a folded state enveloping the electrode assembly.
FIG. 17 is a schematic structural diagram of the insulator shown in FIG. 15 in an unfolded state.
FIG. 18 is a schematic structural diagram of an insulator in an unfolded state according to yet another embodiment of the present application.
FIG. 19 is a schematic structural diagram of an insulator in a folded state enveloping an electrode assembly according to yet another embodiment of the present application.
FIG. 20 is a schematic cross-sectional view of the insulator shown in FIG. 19 in a folded state enveloping the electrode assembly.
FIG. 21 is a schematic structural diagram of the insulator shown in FIG. 19 in an unfolded state.
FIG. 22 is a schematic cross-sectional view of an insulator in a folded state enveloping an electrode assembly according to yet another embodiment of the present application.

Description of reference signs:
1000: vehicle; 1100: battery; 1200: controller; 1300: motor; 10: casing; 11: first portion; 12: second portion; 20: battery cell; 21: housing; 211: shell; 2111: mounting cavity; 212: end cover; 22: electrode terminal; 23: electrode assembly; 231: sidewall; 2311: large face; 2312: side face; 232: bottom face; 233: top face; 24: pressure relief mechanism;
100: insulator; 110: insulating body; 1101: accommodating cavity; 111: large-face region; 1111: first through-hole; 112: side-face region; 1121: side-face portion; 11211: second through-hole; 11212: accommodating groove; 113: bottom-face region; 1131: first insulating portion; 1132: second insulating portion; 11311: third through-hole; 114: top-face region; 1141: first top-face portion; 1142: second top-face portion; 115: third insulating portion; 120: buffer body; 121: large-face buffer portion; 1211: arcuate surface; 122: side-face buffer portion; 123: intermediate buffer portion; 130: functional layer; 131: thermally conductive layer; and 132: thermal insulation layer.

### DESCRIPTION OF EMBODIMENTS

The embodiments of the present application are described in detail below, and examples of these embodiments are illustrated in the accompanying drawings, where the same or similar reference numerals throughout denote the same or similar elements or elements having the same or similar functions. The embodiments described below with reference to the drawings are exemplary and intended to explain the present application, and should not be construed as limiting the present application.

In the description of the present application, it should be understood that the terms indicating orientation or positional relationships, such as "length," "width," "upper," "lower," "front," "rear," "left," "right," "vertical," "horizontal," "top," "bottom," "inner," and "outer," are based on the orientation or positional relationships shown in the drawings. These terms are used merely for convenience in describing the present application and simplifying the description, and do not indicate or imply that the referenced device or element must have a specific orientation, be constructed, or operate in a specific orientation, and thus should not be construed as limiting the present application.

Furthermore, the terms "first" and "second" are used for descriptive purposes only and should not be understood as indicating or implying relative importance or implicitly specifying the number of technical features indicated. Thus, a feature defined with "first" or "second" may explicitly or implicitly include one or more of such features. In the description of the present application, "multiple" means two or more, unless explicitly and specifically defined otherwise.

In the present application, unless explicitly specified and limited otherwise, terms such as "mounted," "connected," "coupled," and "fixed" should be interpreted in a broad sense. For example, they may refer to a fixed connection, a detachable connection, or an integral formation; they may refer to a mechanical connection or an electrical connection; they may refer to a direct connection or an indirect connection via an intermediary; or they may refer to an internal communication between two elements or an interaction relationship between two elements. Those of ordinary skill in the art can understand the specific meanings of the above terms in the present application based on specific circumstances.

In the description of the present application, it should be noted that the term "and/or" merely describes an association relationship between associated objects, indicating that three relationships may exist. For example, A and/or B may indicate: A exists alone, A and B exist simultaneously, or B exists alone.

It should also be noted that, in the embodiments of the present application, the same reference numerals denote the same components or parts. For identical parts in the embodiments of the present application, the drawings may only label the reference numeral for one of the parts or components as an example. It should be understood that the reference numerals are equally applicable to other identical parts or components.

In the present application, the terms "one embodiment," "some embodiments," "example," "specific example," or "some examples" mean that a specific feature, structure, material, or characteristic described in connection with the embodiment or example is included in at least one embodiment or example of the present application. In this specification, schematic expressions of the above terms do not necessarily refer to the same embodiment or example. Moreover, the described specific features, structures, materials, or characteristics may be combined in any suitable manner in any one or more embodiments or examples. Additionally, those skilled in the art may combine and integrate different embodiments or examples described in this specification, as well as features of different embodiments or examples, provided they do not conflict with each other.

Currently, from the perspective of market trends, the application of traction batteries is becoming increasingly widespread. Traction batteries are not only applied in energy storage power supply systems for hydropower, thermal power, wind power, and solar power plants, but also widely applied in electric vehicles such as electric bicycles, electric motorcycles, and electric cars, as well as in many fields such as military equipment and aerospace. As the application fields of traction batteries continue to expand, the market demand for them is also continuously increasing.

A battery typically includes one or more battery cells. During the charge-discharge cycles of a battery cell, the electrode plates within the electrode assembly swell and contract. During the swelling of the electrode assembly, the electrode plates within the electrode assembly are deformed due to the swelling force. However, uneven distribution of the swelling force easily causes wrinkling of the electrode plates. In particular, after the negative electrode plate wrinkles, the electrode plate in the wrinkled region is prone to the phenomenon of loss of continuity due to local electrolyte deficiency caused by volume changes. Additionally, the intercalation and deintercalation of lithium ions in this region may deteriorate, resulting in lithium precipitation, which impairs the reliability and cycle life of the battery.

To mitigate the swelling force of the electrode assembly, a buffer member can be placed between the electrode assembly and the shell of the battery cell. The swelling force of the electrode assembly compresses the buffer member to elastically deform. This elastic deformation of the buffer member can mitigate the swelling force of the electrode assembly, and reduce the risk of lithium precipitation and wrinkling in the electrode assembly. However, in the assembly process of the battery cell, the buffer member and the electrode assembly are typically manually stacked and then the stack is enveloped and fixed with an insulator. This assembly method is inefficient and significantly affects the production efficiency of the battery cell.

Based on the above considerations, the embodiments of the present application provide a battery cell. In this battery cell, an insulating body of an insulator envelops an electrode assembly to insulate and separate a shell from the electrode assembly, reducing the risk of short circuits. During the swelling of the electrode assembly, an outer wall of the electrode assembly swells toward the housing, and the buffer body, located between the electrode assembly and the housing, is elastically deformed by the swelling of the electrode assembly. The elastic deformation of the buffer body cushions the swelling of the electrode assembly, mitigating the swelling force of the electrode assembly, reducing the risk of wrinkling and lithium precipitation in the electrode assembly, and improving the reliability and cycle life of the battery cell. Additionally, by connecting the insulating body and the buffer body to form an integral structure, during the assembly process of the battery cell, this integral structure can be directly assembled with the electrode assembly to achieve envelopment of the electrode assembly. Compared to the aforementioned assembly method, this eliminates the step of separately assembling the buffer member, reducing the number of assembly steps and the number of assembled components, which is conducive to improving the assembly efficiency of the battery cell. Moreover, fewer assembly steps also facilitate automated production, enhancing the production efficiency of the battery cell.

The insulator, battery cell, battery, and electric apparatus using the battery as a power supply disclosed in the embodiments of the present application are described below. The electric apparatus may include, but is not limited to, mobile phones, tablets, laptops, electric toys, electric tools, electric bicycles, electric vehicles, ships, and spacecrafts. Electric toys may include stationary or mobile electric toys, such as gaming consoles, electric car toys, electric ship toys, and electric airplane toys. Spacecraft may include airplanes, rockets, space shuttles, and spaceships.

For ease of explanation, the following embodiments take a vehicle 1000 as an example of an electric apparatus according to an embodiment of the present application.

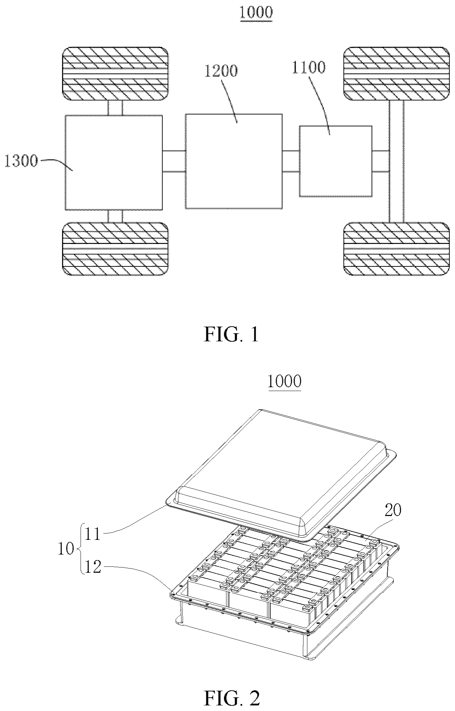

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid electric vehicle, or an extended-range electric vehicle. A battery 1100 is disposed inside the vehicle 1000, and the battery 1100 may be positioned at the bottom, front, or rear of the vehicle 1000. The battery 1100 may be used to supply power to the vehicle 1000. For example, the battery 1100 may be used as an operational power supply for the vehicle 1000. The vehicle 1000 may further include a controller 1200 and a motor 1300, where the controller 1200 is configured to control the battery 1100 to supply power to the motor 1300, for instance, to meet the power demands for starting, navigating, and driving the vehicle 1000.

In some embodiments of the present application, the battery 1100 may not only serve as an operational power supply for the vehicle 1000 but also as a driving power supply for the vehicle 1000, replacing or partially replacing fuel or natural gas to provide driving power for the vehicle 1000.

Referring to FIG. 2, as an embodiment of the battery 1100, the battery 1100 includes a casing 10 and a battery cell 20, with the battery cell 20 accommodated within the casing 10. The casing 10 is configured to provide an accommodating space for the battery cell 20, and the casing 10 may adopt various structures. In some embodiments, the casing 10 may include a first portion 11 and a second portion 12, where the first portion 11 and the second portion 12 are mutually covered, and the first portion 11 and the second portion 12 together define the accommodating space for the battery cell 20. The second portion 12 may be a hollow structure with an opening at one end, the first portion 11 may be a plate-like structure, the first portion 11 covers the opening side of the second portion 12, such that the first portion 11 and the second portion 12 together define the accommodating space. Alternatively, both the first portion 11 and the second portion 12 may be hollow structures with an opening on one side, with the opening side of the first portion 11 covering the opening side of the second portion 12. Of course, the casing 10 formed by the first portion 11 and the second portion 12 may have various shapes, such as a cylinder or a cuboid.

In the battery 1100, there may be multiple battery cells 20, and the multiple battery cells 20 may be connected in series, parallel, or a combination thereof, where the combination refers to a mix of series and parallel connections among the multiple battery cells 20.

In one embodiment, the multiple battery cells 20 may be directly connected in series, parallel, or a combination thereof, and the entirety formed by the multiple battery cells 20 is accommodated within the casing 10. Of course, alternatively, the battery 1100 may include multiple battery cells 20 first connected in series, parallel, or a combination thereof to form battery modules, and then multiple battery modules are connected in series, parallel, or a combination thereof to form an entirety, which is accommodated within the casing 10. The battery 1100 may further include other structures. For example, the battery 1100 may further include a busbar component for achieving electrical connections between the multiple battery cells 20.

Each battery cell 20 may be a secondary battery or a primary battery, or may be a lithium-sulfur battery, a sodium-ion battery, or a magnesium-ion battery, but is not limited thereto. The battery cell 20 may be cylindrical, flat, cuboidal, or of other shapes.

As another embodiment of the battery 1100, the battery 1100 may exclude the casing 10, and instead, multiple battery cells 20 are electrically connected and assembled into an entirety with necessary fixing structures before being installed in an electric apparatus.

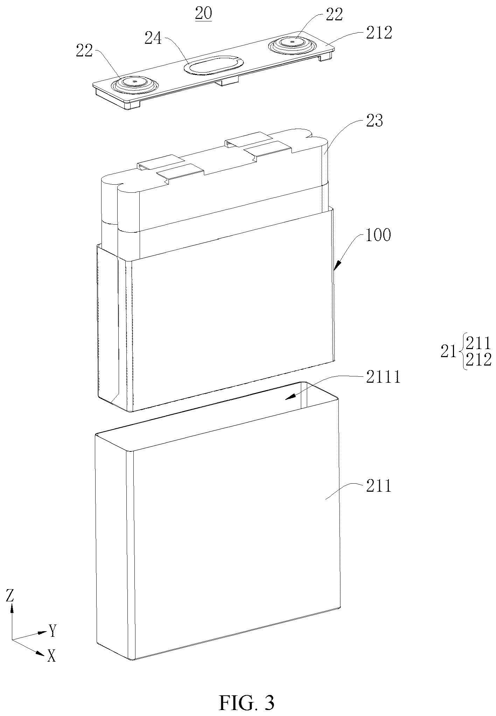

Referring to FIG. 3, FIG. 3 is a schematic exploded view of a structure of a battery cell 20 according to some embodiments of the present application. The battery cell 20 is the smallest unit constituting a battery. As shown in FIG. 3, the battery cell 20 includes a housing 21, an electrode assembly 23, and other functional components. The housing 21 includes a shell 211 and an end cover 212, where the shell 211 covers an opening of the end cover 212, the shell 211 and the end cover 212 together form a mounting cavity 2111, and the mounting cavity 2111 provides installation space for the electrode assembly 23 and other components.

The end cover 212 is a component that covers the opening of the shell 211 to isolate the internal environment of the battery cell 20 from the external environment. Without limitation, a shape of the end cover 212 may be adapted to a shape of the shell 211 to fit with the shell 211. In one embodiment, the end cover 212 may be made of a material with certain hardness and strength (for example, aluminum alloy), so that the end cover 212 is less likely to deform when subjected to compression or collision, enabling the battery cell 20 to have higher structural strength and improved safety performance. Functional components such as electrode terminals 22 may be provided on the end cover 212. The electrode terminals 22 may be electrically connected to the electrode assembly 23 for outputting or inputting electrical energy of the battery cell 20.

In some embodiments, the end cover 212 may further be provided with a pressure relief mechanism 24 for releasing internal pressure when the internal pressure or temperature of the battery cell 20 reaches a threshold. The material of the end cover 212 may vary, such as copper, iron, aluminum, stainless steel, aluminum alloy, or plastic.

In some embodiments, an insulating sheet may be provided on the inner side of the end cover 212, and the insulating sheet may be used to isolate the electrical connection components within the shell 211 from the end cover 212, reducing the risk of short circuits. For example, the insulating sheet may be made of plastic or rubber.

The shell 211 is a component that cooperates with the end cover 212 to form the internal environment of the battery cell 20, where the formed internal environment may be used to accommodate the electrode assembly 23, an electrolyte, and other components. The shell 211 and the end cover 212 may be independent components, an opening is provided on the shell 211, and the end cover 212 covers the opening to form the internal environment of the battery cell 20. Without limitation, the end cover 212 and the shell 211 may alternatively be integrated. Specifically, the end cover 212 and the shell 211 may form a common connection surface before other components are inserted into the shell, and when the interior of the shell 211 needs to be sealed, the end cover 212 covers the shell 211. The shell 211 may have various shapes and sizes, such as cuboidal, cylindrical, or hexagonal prismatic. Specifically, the shape of the shell 211 may be determined based on the specific shape and size of the electrode assembly 23. The material of the shell 211 may vary, such as copper, iron, aluminum, stainless steel, aluminum alloy, or plastic, and the embodiments of the present application do not impose specific limitations thereto.

The electrode assembly 23 is a component in the battery cell 20 where electrochemical reactions occur. The shell 211 may include one or more electrode assemblies 23. The electrode assembly 23 includes a positive electrode, a negative electrode, and a separator. During the charging and discharging processes of the battery cell, active ions (for example, lithium ions) intercalate and deintercalate back and forth between the positive electrode and the negative electrode. The separator is disposed between the positive electrode and the negative electrode to prevent short circuits between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In some embodiments, the negative electrode may be a negative electrode plate, and the negative electrode plate may include a negative electrode current collector and a negative electrode active material disposed on at least one surface of the negative electrode current collector.

In some embodiments, the separator is a separation film. The present application does not impose specific limitations on the type of separation film, and any well-known porous structure separation film with good chemical and mechanical stability may be used.

In some embodiments, the electrode assembly 23 has a wound structure, where the positive electrode plate and the negative electrode plate are wound into a wound structure.

In some embodiments, the electrode assembly 23 has a laminated structure.

For ease of description in the present application, the Z-axis in the accompanying drawings represents the up-down direction, with the positive direction of the Z-axis indicating up and the negative direction of the Z-axis indicating down; the Y-axis in the accompanying drawings represents the left-right direction, with the positive direction of the Y-axis indicating right and the negative direction of the Y-axis indicating left; and the X-axis in the accompanying drawings represents the front-rear direction, with the positive direction of the X-axis indicating front and the negative direction of the X-axis indicating rear. The Z1-axis in the accompanying drawings represents the up-down direction, with the positive direction of the Z1-axis indicating up and the negative direction of the Z1-axis indicating down; the Y1-axis in the accompanying drawings represents the left-right direction, with the positive direction of the Y1-axis indicating right and the negative direction of the Y1-axis indicating left; and the X1-axis in the accompanying drawings represents the front-rear direction, with the positive direction of the X1-axis indicating front and the negative direction of the X1-axis indicating rear.

As shown in FIGs. 3 to 6, in one embodiment of the present application, a battery cell 20 is provided. The battery cell 20 includes a housing 21, an electrode assembly 23, and an insulator 100, where the housing 21 has a mounting cavity 2111; the electrode assembly 23 is disposed in the mounting cavity 2111; the insulator 100 includes a buffer body 120 and an insulating body 110 that are disposed in the mounting cavity 2111, the insulating body 110 enveloping the electrode assembly 23, and the buffer body 120 being located between the electrode assembly 23 and the housing 21; and the buffer body 120 and the insulating body 110 are connected to form an integral structure.

The housing 21 refers to the outer shell structure of the battery cell 20, with the inner cavity of the housing 21 forming the mounting cavity 2111. The insulator 100 and the electrode assembly 23 are both located within the mounting cavity 2111, and the mounting cavity 2111 provides installation space for the electrode assembly 23, the insulator 100, and other components.

The insulator 100 refers to an insulating component enveloping the electrode assembly 23. The insulator 100 envelops around the outside of the electrode assembly 23 and can insulating and separating the electrode assembly 23 from the housing 21, reducing the risk of short circuits. After being removed from the electrode assembly 23, the insulator 100 can be unfolded into a sheet or may be box-shaped, with its specific form determined based on actual needs.

The insulator 100 includes the insulating body 110 and the buffer body 120. The insulating body 110 is a component made of an insulating material, where the insulating material should be made of a material with good resistance to the electrolyte to suit the internal environment of the battery cell 20. For example, the insulating material may be polyethylene terephthalate, polyethylene, polypropylene, or the like. Those materials have good resistance to electrolytes, excellent insulating capabilities, and low cost, facilitating manufacturing and use. For example, the material of the insulating body 110 is polypropylene.

The insulating body 110 envelops the electrode assembly 23, and the insulator 100 has insulating properties, enabling the insulator 100 to insulate the electrode assembly 23 from the housing 21, reducing the risk of short circuits.

The buffer body 120 refers to a component with certain elasticity, and the buffer body 120 is capable of deforming under compression and automatically recovering after the compressive force is removed. To adapt to the internal environment of the battery 1100, the buffer body 120 should be made of a material with good resistance to the electrolyte, such as aerogel, foam material, or rubber. For example, the material of the buffer body 120 is one or more of ethylene-vinyl acetate copolymer, foamed polyurethane, foamed polypropylene, foamed polyethylene, styrene-butadiene rubber, butadiene rubber, or silica aerogel. These materials have good resistance to the electrolyte, strong buffering and pressure resistance, mature processes, simple procurement, and easy processing, and are convenient for manufacturing and use.

The buffer body 120 is located between the electrode assembly 23 and the housing 21. It can be understood that when the electrode assembly 23 swells, an outer wall of the electrode assembly 23 moves toward the housing 21 to compress the buffer body 120 to deform.

The buffer body 120 and the insulating body 110 are connected to form an integral structure. It can be understood that the buffer body 120 and the insulating body 110 are interconnected to form a single integral component. For example, the buffer body 120 and the insulating body 110 may be connected by screws, snaps, adhesive, magnetic adsorption, or other structures capable of connecting and fixing two components.

In the battery cell 20 of the embodiments of the present application, during swelling of the electrode assembly 23, an outer wall of the electrode assembly 23 swells toward the housing 21, and the buffer body 120, located between the electrode assembly 23 and the housing 21, is elastically deformed by the compression from the outer wall of the electrode assembly 23, whereby the elastic deformation of the buffer body 120 cushions the swelling of the electrode assembly 23, thereby mitigating the swelling force of the electrode assembly 23, reducing the risk of wrinkling and lithium precipitation in the electrode assembly 23, and improving the reliability and cycle life of the battery cell 20. Additionally, during the assembly process of the battery cell 20, the insulating body 110 and the buffer body 120 are connected to form an integral structure. This integral structure can be directly assembled with the electrode assembly 23 to achieve envelopment of the electrode assembly 23, which eliminates the step of separately assembling the buffer body 120, reduces the number of assembly steps and the number of assembled components, and facilitates the improvement of assembly efficiency of the battery cell 20. Moreover, fewer assembly steps also facilitate automated production, enhancing the production efficiency of the battery cell 20.

In this embodiment, when the electrode assembly 23 contracts, the deformation of the buffer body 120 recovers accordingly. During the swelling and contraction of the electrode assembly 23, the buffer body 120 can adapt to the swelling and contraction of the electrode assembly 23, thereby mitigating stress changes caused by the swelling and contraction of the electrode assembly 23, reducing the risk of wrinkling in the electrode assembly 23, improving lithium precipitation of the electrode assembly 23 during cycling, and enhancing the cycle life of the electrode assembly 23.

In another embodiment of the present application, as shown in FIGs. 3 to 6, the buffer body 120 of the provided battery cell 20 is disposed between the housing 21 and a sidewall 231 of the electrode assembly 23.

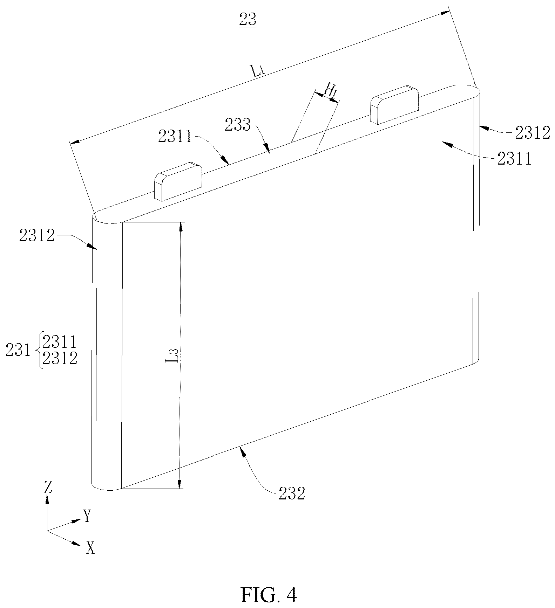

The electrode assembly 23 may be formed by winding or laminating electrode plates. If the electrode assembly 23 is formed by winding electrode plates into a stacked structure, as the electrode plates are wound layer by layer, the surfaces of the electrode plates perpendicular to the thickness direction are also wound. After winding is complete, the sidewall 231 of the electrode assembly 23 may refer to the surface of the outermost electrode plate facing away from the inner layers. For example, as shown in FIG. 4, the sidewall 231 of the electrode assembly 23 refers to the wall surface of the electrode assembly 23 parallel to the height direction (see direction Z in FIG. 4). If the electrode assembly 23 is formed by laminating electrode plates into a stacked structure, the sidewall 231 of the electrode assembly 23 may refer to a wall surface of the electrode assembly 23 perpendicular to the lamination direction of the electrode plates and a wall surface parallel to the lamination direction of the electrode plates. During the swelling of the electrode assembly 23, the swelling of the electrode assembly 23 primarily occurs along the thickness direction of the electrode plates, meaning the swelling of the electrode assembly 23 mainly occurs at the sidewall 231.

In the battery cell 20 of the embodiments of the present application, during the charging and discharging processes of the battery cell 20, the swelling of the electrode assembly 23 primarily occurs at the sidewall 231, where the sidewall 231 of the electrode assembly 23 swells toward the housing 21. The buffer body 120 is located between the sidewall 231 of the electrode assembly 23 and the housing 21, so when the sidewall 231 of the electrode assembly 23 swells, it can compress the buffer body 120 to deform, and the buffer body 120 can mitigate the swelling force at the primary location of the electrode assembly 23, which can effectively reduce the risk of wrinkling and lithium precipitation in the electrode assembly 23.

In another embodiment of the present application, as shown in FIGs. 4, 5, and 6, the sidewall 231 of the electrode assembly 23 of the provided battery cell 20 includes a large face 2311, the buffer body 120 includes a large-face buffer portion 121, and the large-face buffer portion 121 covers the large face 2311.

The large face 2311 may refer to a wall surface with the largest area among the sidewalls 231. In a wound electrode assembly 23, the large face 2311 may also refer to a planar surface of the sidewall 231. For example, as shown in FIG. 4, the large face 2311 may refer to the wall surface of the electrode assembly 23 parallel to the height direction (see direction Z in FIG. 4) and the width direction (see direction Y in FIG. 4), to be specific, the large face 2311 is the front wall surface or rear wall surface of the electrode assembly 23. In a wound electrode assembly 23, the large face 2311 refers to the planar surface of the sidewall 231 perpendicular to a stacking direction of the electrode plates.

The large-face buffer portion 121 is a portion of the buffer body 120 that covers the large face 2311.

In the battery cell 20 of the embodiments of the present application, during the charging and discharging process of the electrode assembly 23, the large face 2311 exhibits the most significant swelling, and the large face 2311 swells and compresses the large-face buffer portion 121 to deform, mitigating the swelling force of the large face 2311. Thus, the large-face buffer portion 121 can mitigate the swelling force at the most prominent location of the electrode assembly 23, thereby effectively mitigating the swelling force of the electrode assembly 23 and reducing the risk of wrinkling and lithium precipitation in the electrode assembly 23.

In another embodiment of the present application, as shown in FIGs. 4, 5, and 7, an area of the large face 2311 of the provided battery cell 20 is S₁, an area of the large-face buffer portion 121 is S₂, and 0.8S₁ ≤ S₂ ≤ 1.05S₁.

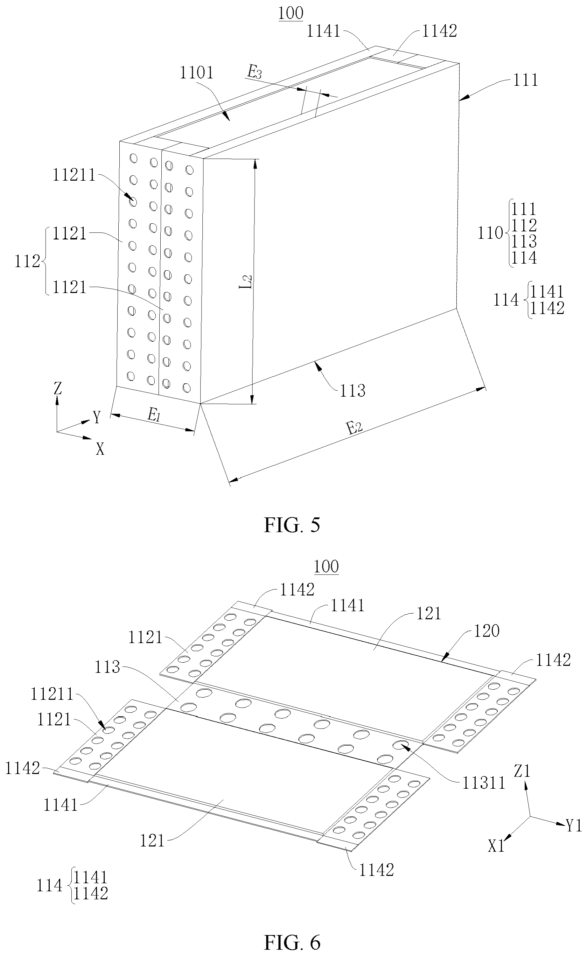

The area S₂ of the large-face buffer portion 121 may be an area of a projection of the large-face buffer portion 121 in the thickness direction of the electrode assembly 23 (see direction X in FIG. 5). For example, as shown in FIG. 5, the large-face buffer portion 121 is a flat pad, the area S₂ of the large-face buffer portion 121 may also be an area of a surface of the large-face buffer portion 121 facing the electrode assembly 23. For example, as shown in FIG. 6, the area S₂ of the large-face buffer portion 121 may alternatively be an area of an upper surface of the large-face buffer portion 121.

In the battery cell 20 of the embodiments of the present application, through the design of 0.8S₁ ≤ S₂ ≤ 1.05S₁, the large-face buffer portion 121 can cover most of the region of the large face 2311, thereby better mitigating the swelling force of the large face 2311, and more effectively reducing the risk of wrinkling and lithium precipitation in the electrode assembly 23. Additionally, the large-face buffer portion 121 is not designed to be excessively large, which is conducive to maintaining the energy density of the battery cell 20.

In one embodiment, S₂ may include, but is not limited to, 0.8S₁, 0.81S₁, 0.82S₁, 0.83S₁, 0.84S₁, 0.85S₁, 0.86S₁, 0.87S₁, 0.88S₁, 0.89S₁, 0.9S₁, 0.91S₁, 0.92S₁, 0.93S₁, 0.94S₁, 0.95S₁, 0.96S₁, 0.97S₁, 0.98S₁, 0.99S₁, 1S₁, 1.O1S₁, 1.02S₁, 1.03S₁, 1.04S₁, or 1.05S₁.

In another embodiment of the present application, as shown in FIGs. 4 to 9, a thickness of the electrode assembly 23 of the provided battery cell 20 is H₁, a thickness of the large-face buffer portion 121 is H₂, and 0.05 millimeter (mm) ≤ H₂ ≤ 0.6H₁.

In the battery cell 20 of the embodiments of the present application, through the setting of 0.05 mm ≤ H₂ ≤ 0.6H₁, the thickness H₂ of the large-face buffer portion 121 is greater than or equal to 0.05 mm, so that the large-face buffer portion 121 has a certain thickness, and the large-face buffer portion 121 can effectively mitigate the swelling force of the large face 2311. The upper limit of the thickness H₂ of the large-face buffer portion 121 is related to the thickness H₁ of the electrode assembly 23, allowing the large-face buffer portion 121 to correspondingly mitigate the swelling force of electrode assemblies 23 of different thicknesses, resulting in a lower risk of wrinkling and lithium precipitation in the electrode assembly 23. Additionally, a ratio of the thickness H₂ of the large-face buffer portion 121 to the thickness H₁ of the electrode assembly 23 is less than or equal to 0.6, allowing the thickness H₂ of the large-face buffer portion 121 to be designed relatively small, which is conducive to reducing material usage and lowering manufacturing costs. In addition, the space occupied by the large-face buffer portion 121 in the mounting cavity 2111 is reasonable, which is conducive to increasing the energy density of the battery cell 20.

In one embodiment, H₂ may be 0.05 mm, 0.1 mm, 0.15 mm, 0.2 mm, 0.25 mm, 0.3 mm, 0.05H₁, 0.1H₁, 0.15H₁, 0.2H₁, 0.25H₁, 0.3H₁, 0.35H₁, 0.4H₁, 0.45H₁, 0.5H₁, 0.55H₁, or 0.6H₁.

In another embodiment of the present application, as shown in FIGs. 4 to 9, the provided battery cell 20 satisfies 0.2 mm ≤ H₂ ≤ 0.3H₁.

In the battery cell 20 of the embodiments of the present application, through the setting of 0.2 mm ≤ H₂ ≤ 0.3H₁, the thickness H₂ of the large-face buffer portion 121 is greater than or equal to 0.2 mm, allowing the minimum value of the thickness H₂ of the large-face buffer portion 121 to be designed slightly larger, enabling the large-face buffer portion 121 to better mitigate the swelling force of the large face 2311. A ratio of the thickness H₂ of the large-face buffer portion 121 to the thickness H₁ of the electrode assembly 23 is less than or equal to 0.3, allowing the maximum value of the thickness H₂ of the large-face buffer portion 121 to be designed relatively small, which is conducive to reducing material usage and lowering manufacturing costs. In addition, the space occupied by the large-face buffer portion 121 in the mounting cavity 2111 is more reasonable, which is conducive to increasing the energy density of the battery cell 20.

In one embodiment, H₂ may be 0.2 mm, 0.22 mm, 0.24 mm, 0.26 mm, 0.28 mm, 0.3 mm, 0.02H₁, 0.04H₁, 0.06H₁, 0.08H₁, 0.1H₁, 0.12H₁, 0.14H₁, 0.16H₁, 0.18H₁, 0.2H₁, 0.22H₁, 0.24H₁, 0.26H₁, 0.28H₁, or 0.3H₁.

In another embodiment of the present application, as shown in FIGs. 4, 5, and 6, the insulating body 110 of the provided battery cell 20 includes a large-face region 111, the large-face region 111 covers the large face 2311, and the large-face buffer portion 121 is connected to the large-face region 111.

The large-face region 111 is a region of the insulating body 110 that covers the large face 2311. For example, as shown in FIG. 5, the large-face region 111 is a portion of the insulating body 110 parallel to the height direction (see direction Z in FIG. 5) and the width direction (see direction Z in FIG. 5). To be specific, when the insulating body 110 is folded to envelop the electrode assembly 23, the large-face region 111 refers to the front wall or rear wall of the insulating body 110.

The large-face buffer portion 121 is connected to the large-face region 111. It can be understood that a surface of the large-face region 111 facing the electrode assembly 23 is connected to the large-face buffer portion 121; or a surface of the large-face region 111 facing away from the electrode assembly 23 is connected to the large-face buffer portion 121; or both a surface of the large-face region 111 facing the electrode assembly 23 and a surface facing away from the electrode assembly 23 are connected to the large-face buffer portion 121. The large-face region 111 and the large-face buffer portion 121 may be connected by adhesion, thermal pressing, or other connection methods, with the specific connection method not limited herein.

In the battery cell 20 of the embodiments of the present application, the large-face region 111 can separate the large face 2311 from the housing 21, so that the large face 2311 of the electrode assembly 23 can be insulated from the housing 21, reducing the risk of short circuits.

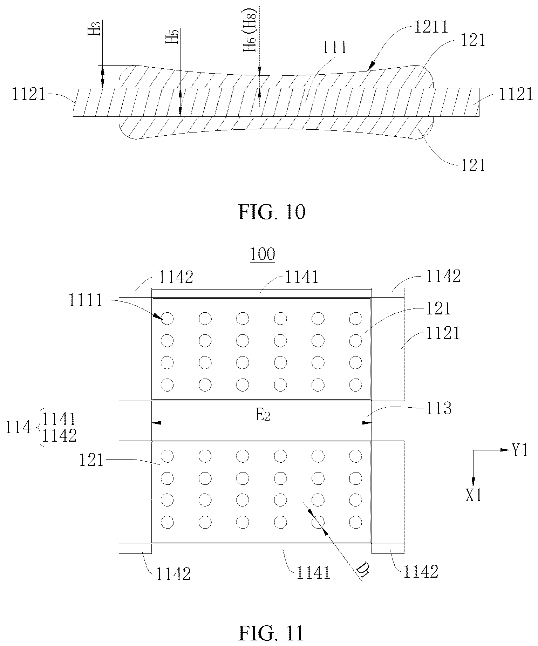

In another embodiment of the present application, as shown in FIG. 10, a surface of the large-face buffer portion 121 of the provided battery cell 20 facing the large face 2311 is configured with an arcuate surface 1211 for fitting with the large face 2311.

The arcuate surface 1211 is a surface of the large-face buffer portion 121 with a curvature, and a shape of the arcuate surface 1211 may vary, such as a circular arc surface or an elliptical arc surface. The arcuate surface can fit with the large face. It can be understood that the arcuate surface 1211 can fit with the unswelled large face 2311, or the arcuate surface 1211 can fit with the large face 2311 during swelling, so that the buffer body 120 can effectively mitigate the swelling force of the large face 2311. For example, the arcuate surface 1211 may be, but is not limited to, a convex arc surface or a concave arc surface, and its specific form may be selected based on the actual shape of the large face 2311. Fitting may mean that the arcuate surface 1211 is directly in contact with the large face 2311 or the arcuate surface 1211 fits with the large face 2311 with the large-face region 111 interposed therebetween, and the specific configuration may be designed according to the position of the large-face buffer portion 121.

In the battery cell 20 of the embodiments of the present application, the arcuate surface 1211 can fit with the large face 2311, so that the large-face buffer portion 121 can effectively mitigate the swelling force of the large face 2311, which is conducive to reducing the risk of wrinkling in the electrode assembly 23 and improving the cycle service life of the battery cell 20.

In another embodiment of the present application, as shown in FIG. 10, a thickness of the electrode assembly 23 of the provided battery cell 20 is H₁, a thickness at the thickest part of the large-face buffer portion 121 is H₅, and 0.05 mm ≤ H₅ ≤ 0.6H₁.

The thickness H₅ at the thickest part of the large-face buffer portion 121, as shown in FIG. 10, may be thicknesses at the left-side and right-side portions of the large-face buffer portion 121.

In the battery cell 20 of the embodiments of the present application, through the setting of 0.05 mm ≤ H₅ ≤ 0.6H₁, the thickness H₅ at the thickest part of the large-face buffer portion 121 is greater than or equal to 0.05 mm, so that the large-face buffer portion 121 can have a certain thickness to effectively mitigate the swelling force of the large face 2311. Moreover. the upper limit of the thickness H₅ at the thickest part of the large-face buffer portion 121 is related to the thickness H₁ of the electrode assembly 23, allowing the large-face buffer portion 121 to correspondingly mitigate the swelling force of electrode assemblies 23 of different thicknesses, resulting in a lower risk of wrinkling and lithium precipitation in the electrode assembly 23. Additionally, a ratio of the thickness H₅ at the thickest part of the large-face buffer portion 121 to the thickness H₁ of the electrode assembly 23 is less than or equal to 0.6, allowing the thickness at the thickest part of the large-face buffer portion 121 to be designed relatively small, which is conducive to reducing material usage and lowering manufacturing costs. In addition, the thickness setting at the thickest part of the large-face buffer portion 121 is reasonable, which can reduce the space occupied by the large-face buffer portion 121 in the mounting cavity 2111, and also helps to increase the energy density of the battery cell 20.

In one embodiment, H₅ may be 0.05 mm, 0.1 mm, 0.15 mm, 0.2 mm, 0.25 mm, 0.3 mm, 0.05H₁, 0.1Hi, 0.15H₁, 0.2H₁, 0.25H₁, 0.3H₁, 0.35H₁, 0.4H₁, 0.45H₁, 0.5H₁, 0.55H₁, or 0.6H₁.

In another embodiment of the present application, as shown in FIG. 10, the provided battery cell 20 satisfies 0.2 mm ≤ H₅ ≤ 0.3H₁.

In the battery cell 20 of the embodiments of the present application, through the setting of 0.2 mm ≤ H₅ ≤ 0.3H₁, the thickness H₅ at the thickest part of the large-face buffer portion 121 is greater than or equal to 0.2 mm, allowing the minimum thickness value at the thickest part of the large-face buffer portion 121 to be designed slightly larger, so that the large-face buffer portion 121 has a good thickness to better mitigate the swelling force of the large face 2311. A ratio of the thickness H₅ at the thickest part of the large-face buffer portion 121 to the thickness H₁ of the electrode assembly 23 is less than or equal to 0.3, allowing the maximum value of the thickness H5 at the thickest part of the large-face buffer portion 121 to be designed relatively small, which is conducive to reducing material accumulation and lowering manufacturing costs, and is also conducive to increasing the energy density of the battery cell 20.

In one embodiment, H₅ may be 0.2 mm, 0.22 mm, 0.24 mm, 0.26 mm, 0.28 mm, 0.3 mm, 0.02H₁, 0.04H₁, 0.06H₁, 0.08H₁, 0.1H₁, 0.12H₁, 0.14H₁, 0.16H₁, 0.18H₁, 0.2H₁, 0.22H₁, 0.24H₁, 0.26H₁, 0.28H₁, or 0.3H₁.

In another embodiment of the present application, as shown in FIG. 10, a thickness of the electrode assembly 23 of the provided battery cell 20 is H₁, a thickness at the thinnest part of the large-face buffer portion 121 is H₆, and 0.005 mm ≤ H₆ ≤ 0.3H₁.

The thickness H₆ at the thinnest part of the large-face buffer portion 121, as shown in FIG. 10, may be a thickness at the lowest point of the arcuate surface 1211 of the large-face buffer portion 121.

In the battery cell 20 of the embodiments of the present application, through the setting of 0.005 mm ≤ H₆ ≤ 0.3H₁, the thickness H₆ at the thinnest part of the large-face buffer portion 121 is greater than or equal to 0.005 mm, so that the thinnest part of the large-face buffer portion 121 can have a certain thickness to effectively mitigate the swelling force of the large face 2311. The upper limit of the thickness H₆ at the thinnest part of the large-face buffer portion 121 is related to the thickness H₁ of the electrode assembly 23, allowing the thinnest part of the large-face buffer portion 121 to correspondingly mitigate the swelling force of electrode assemblies 23 of different thicknesses, resulting in a lower risk of wrinkling and lithium precipitation in the electrode assembly 23. Additionally, a ratio of the thickness H₆ at the thinnest part of the large-face buffer portion 121 to the thickness H₁ of the electrode assembly 23 is greater than or equal to 0.3, allowing the thickness at the thinnest part of the large-face buffer portion 121 to be designed relatively small, which is conducive to reducing material usage and lowering manufacturing costs. In addition, the thickness setting at the thinnest part of the large-face buffer portion 121 is reasonable, which can reduce the space occupied by the large-face buffer portion 121 in the mounting cavity 2111, and helps to increase the energy density of the battery cell 20.

In one embodiment, H₆ may be 0.05 mm, 0.1 mm, 0.15 mm, 0.2 mm, 0.25 mm, 0.3 mm, 0.05H₁, 0.1H₁, 0.15H₁, 0.2H₁, 0.25H₁, or 0.3H₁.

In another embodiment of the present application, as shown in FIG. 10, the provided battery cell 20 satisfies 0.005 mm ≤ H₆ ≤ 0.1H₁.

In the battery cell 20 of the embodiments of the present application, through the setting of 0.005 mm ≤ H₆ ≤ 0.1H₁, a ratio of the thickness H₆ at the thinnest part of the large-face buffer portion 121 to the thickness H₁ of the electrode assembly 23 is greater than or equal to 0.1, allowing the upper limit of the thickness at the thinnest part of the large-face buffer portion 121 to be designed relatively small, which is conducive to reducing material usage and lowering manufacturing costs. In addition, the thickness setting at the thinnest part of the large-face buffer portion 121 is reasonable, which can reduce the space occupied by the large-face buffer portion 121 in the mounting cavity 2111, and helps to increase the energy density of the battery cell 20.

In one embodiment, H₆ may be 0.05 mm, 0.07 mm, 0.09 mm, 0.11 mm, 0.13 mm, 0.15 mm, 0.17 mm, 0.19 mm, 0.21 mm, 0.02H₁, 0.04H₁, 0.06H₁, 0.08H₁, or 0.1H₁.

In another embodiment of the present application, as shown in FIGs. 4 to 6, an area of the large-face region 111 of the provided battery cell 20 is greater than an area of the large face 2311.

The area of the large-face region 111 may be an area of a projection of the large-face region 111 in the thickness direction of the electrode assembly 23 (see direction X in FIG. 5). For example, as shown in FIG. 5, the area of the large-face region 111 may alternatively be an area of the surface of the large-face region 111 facing the electrode assembly 23. For example, as shown in FIG. 6, the area of the large-face region 111 may alternatively be an area of the upper surface of the large-face region 111.

In the battery cell 20 of the embodiments of the present application, the area of the large-face region 111 is greater than the area of the large face 2311, so that the large-face region 111 can completely cover the large face 2311, the large face 2311 is fully separated from the housing 21, and the electrode assembly 23 has good insulation at the large face 2311, which is conducive to improving the reliability of the battery cell 20.

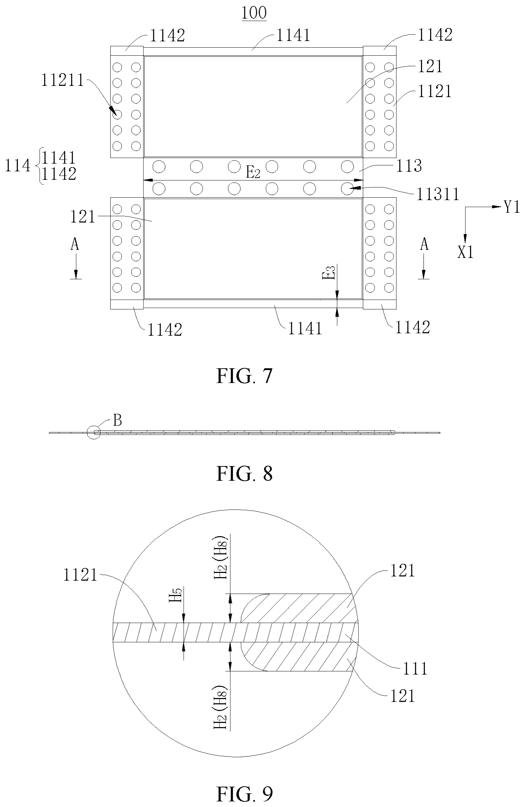

In another embodiment of the present application, as shown in FIG. 9, a thickness of the large-face region 111 of the provided battery cell 20 is H₃, and 0.05 mm ≤ H₃ ≤ 2 mm.

In the battery cell 20 of the embodiments of the present application, through the setting of 0.05 mm ≤ H₃ ≤ 2 mm, the thickness H₃ of the large-face region 111 is within a suitable range, so that the large-face region 111 can provide good insulation between the large face 2311 and the housing 21. The reasonable thickness of the large-face region 111 can reduce the space occupied by the large-face region 111, and helps to increase the energy density of the battery cell 20.

In one embodiment, H₃ may be 0.05 mm, 0.2 mm, 0.4 mm, 0.6 mm, 0.8 mm, 1 mm, 1.2 mm, 1.4 mm, 1.6 mm, 1.8 mm, or 2 mm.

In another embodiment of the present application, as shown in FIG. 9, the provided battery cell 20 satisfies 0.05 mm ≤ H₃ ≤ 1 mm.

In the battery cell 20 of the embodiments of the present application, through the setting of 0.05 mm ≤ H₃ ≤ 1 mm, the upper limit of the thickness H₃ of the large-face region 111 can be designed smaller, which can reduce the space occupied by the large-face region 111, and helps to increase the energy density of the battery cell 20.

In one embodiment, H₃ may be 0.05 mm, 0.1 mm, 0.2 mm, 0.3 mm, 0.4 mm, 0.5 mm, 0.6 mm, 0.7 mm, 0.8 mm, 0.9 mm, or 1 mm.

In another embodiment of the present application, as shown in FIGs. 7 to 9, under a condition that a pressure P is applied along a thickness direction of the large-face buffer portion 121 of the provided battery cell 20, a thickness deformation amount of the large-face buffer portion 121 is a, a thickness of the large-face buffer portion 121 before being subjected to the pressure is b, and c = a/b, where when 0.001 MPa ≤ P ≤ 0.05 MPa, 0.5% ≤ c ≤ 60%; and when P ≥ 1.2 MPa, c ≥ 80%.

The thickness deformation amount a of the large-face buffer portion 121 refers to a difference between the thickness b of the large-face buffer portion 121 before being subjected to force and the thickness of the large-face buffer portion 121 after being subjected to force. The value c refers to a ratio of the thickness deformation amount of the large-face buffer portion 121 to the thickness of the large-face buffer portion 121 before being subjected to force. In practical applications, c refers to the strain of the large-face buffer portion 121 in the thickness direction of the large-face buffer portion 121.

In the battery cell 20 of the embodiments of the present application, by defining the relationship between the applied force and the deformation amount of the large-face buffer portion 121, the large-face buffer portion 121 can match the swelling force of the electrode assembly 23 throughout its lifecycle, which can effectively mitigate the swelling force of the electrode assembly 23, improve wrinkling in the electrode assembly 23, and enhance the cycling capability of the electrode assembly 23.

A pressure-strain curve of the large-face buffer portion 121 may be obtained, but is not limited to, by the following method, specifically as follows:
1. take test samples with dimensions of 50 mm × 50 mm × (1 to 8) mm for testing, with two groups of samples tested each time;
2. place the two groups of samples under a high-speed tensile testing machine and fix them on the test bench with wrinkle tape;
3. install a pressure module on the high-speed tensile testing machine;
4. turn on the power of the high-speed tensile testing machine and adjust the pressure module to 0.5 cm above the sample; and
5. start the pressure-strain curve test with a compression speed of 2 mm/min, and record the pressure-deformation curve until the pressure recorded reaches 8 MPa, to obtain the pressure-strain curve of the sample.

It should be understood that the sequence numbers of the steps in the above embodiments do not imply the order of execution, and the execution order of the processes should be determined by their functions and inherent logic, without constituting any limitation on the implementation process of the embodiments of the present application.

In another embodiment of the present application, as shown in FIGs. 7 to 9, a connection force between the large-face region 111 and the large-face buffer portion 121 of the provided battery cell 20 is greater than or equal to 1 N/m.

The connection force between the large-face region 111 and the large-face buffer portion 121 may be tested in accordance with the test method provided in GB/T 2790-1995, and the specific test steps are not repeated herein.

In the battery cell 20 of the embodiments of the present application, by setting the connection force between the large-face buffer portion 121 and the large-face region 111 to be greater than or equal to 1 N/m, the large-face buffer portion 121 and the large-face region 111 can be reliably connected, which reduces the risk of uneven stress on the electrode assembly 23 due to separation of the large-face buffer portion 121 and the large-face region 111 during use, and is conducive to improving the reliability and cycle stability of the electrode assembly 23. If the connection force between the large-face buffer portion 121 and the large-face region 111 is too small, the large-face buffer portion 121 and the large-face region 111 may easily separate during use of the electrode assembly 23, leading to uneven stress on the electrode assembly 23.

In another embodiment of the present application, as shown in FIGs. 7 to 9, a connection force between the large-face region 111 and the large-face buffer portion 121 of the provided battery cell 20 is greater than or equal to 15 N/m.

In the battery cell 20 of the embodiments of the present application, by setting the connection force between the large-face buffer portion 121 and the large-face region 111 to be greater than or equal to 15 N/m, the large-face buffer portion 121 and the large-face region 111 can be more reliably connected, which reduces the risk of uneven stress on the electrode assembly 23 due to separation of the large-face buffer portion 121 and the large-face region 111 during use, and is conducive to improving the reliability and cycle stability of the electrode assembly 23.

In another embodiment of the present application, as shown in FIG. 11, the provided battery cell 20 is configured with first through-holes 1111 penetrating the large-face region 111 and the large-face buffer portion 121, the first through-holes 1111 enabling an electrolyte to flow to the large face 2311.

The first through-hole 1111 refers to a through-hole penetrating the large-face region 111 and the large-face buffer portion 121. For example, as shown in FIG. 11, the first through-holes 1111 penetrate the large-face region 111 and the large-face buffer portion 121 along the thickness direction of the large-face region 111. Alternatively, the first through-holes 1111 may penetrate the large-face region 111 and the large-face buffer portion 121 obliquely or in a curved manner, and the shapes of the first through-holes 1111 may vary, such as circular, triangular, or quadrilateral. The specific structure of the first through-holes 1111 may be set based on actual needs.

In the battery cell 20 of the embodiments of the present application, the electrolyte within the battery cell 20 can pass through the first through-holes 1111, traversing the large-face region 111 to reach the large face 2311 of the electrode assembly 23, replenishing the large face 2311 of the electrode assembly 23 with the electrolyte, reducing the risk of loss of continuity during the swelling of the electrode assembly 23, and facilitating the extension of service life of the battery cell 20.

In another embodiment of the present application, as shown in FIG. 11, a diameter D₁ of the first through-hole 1111 of the provided battery cell 20 ranges from 0.1 mm to 30 mm.

In the battery cell 20 of the embodiments of the present application, by limiting the diameter D₁ of the first through-hole 1111 to the range of 0.1 mm to 30 mm, the electrolyte can smoothly pass through the large-face region 111 to replenish the large-face region 111. Hollowed-out sizes of the large-face region 111 and the large-face buffer portion 121 are reasonable, enabling the insulator 100 to have good insulation and buffering performance at the large-face region 111.

In one embodiment, the diameter D₁ of the first through-hole 1111 may be 0.1 mm, 5 mm, 10 mm, 15 mm, 20 mm, 25 mm, or 30 mm.

In another embodiment of the present application, as shown in FIG. 11, a diameter D₁ of the first through-hole 1111 of the provided battery cell 20 ranges from 1 mm to 5 mm.

In the battery cell 20 of the embodiments of the present application, by limiting the diameter D₁ of the first through-hole 1111 to the range of 1 mm to 5 mm, the electrolyte can more smoothly pass through the large-face region 111 to replenish the large-face region 111, which also enables the insulator 100 to have better insulation and buffering performance at the large-face region 111.

In one embodiment, the diameter D₁ of the first through-hole 1111 may be 1 mm, 1.5 mm, 2 mm, 2.5 mm, 3 mm, 3.5 mm, 4 mm, 4.5 mm, or 5 mm.

In another embodiment of the present application, as shown in FIG. 11, the number of the first through-holes 1111 of the provided battery cell 20 is N₁, a cross-sectional area of the first through-holes 1111 is S₃, an area of the large-face buffer portion 121 is S₂, and N₁×S₃ ≤ 0.1S₂.

The cross-sectional area S₃ of the first through-hole 1111 may be an area of the shape obtained by sectioning the first through-hole 1111 with a plane perpendicular to the thickness direction of the large-face buffer portion 121 (in other words, a plane parallel to directions X1 and Y1). For example, as shown in FIG. 11, the number of the first through-holes 1111 is multiple, and the multiple first through-holes 1111 are uniformly arranged at the large-face region 111 of the insulator 100, where the first through-holes 1111 may be arranged in a linear or matrix pattern, with the specific arrangement determined based on actual needs and not limited herein.

In the battery cell 20 of the embodiments of the present application, through the design of N₁×S₃ ≤ 0.1S₂, a ratio of the total cross-sectional area of the first through-holes 1111 to the area of the large-face buffer portion 121 is less than 0.1, meaning the first through-holes 1111 occupy a small portion of the large-face buffer portion 121, resulting in a small proportion of a hollowed-out region on the large-face buffer portion 121. This enables the large-face buffer portion 121 to provide a good buffering effect for the electrode assembly 23, and can also reduce polarization differences in the large face 2311 due to uneven buffering, thereby improving the cycling performance of the battery cell 20.

In another embodiment of the present application, as shown in FIGs. 4 and 12 to 14, the sidewall 231 of the electrode assembly 23 of the provided battery cell 20 further includes a side face 2312 adjacent to the large face 2311, the buffer body 120 further includes a side-face buffer portion 122, and the side-face buffer portion 122 covers the side face 2312.

The side face 2312 may refer to a wall surface adjacent to the large face 2311. In a wound electrode assembly 23, the side face 2312 may refer to the wall surface at the bend of the electrode plate. For example, as shown in FIG. 4, the side face 2312 may refer to a surface of the electrode assembly 23 parallel to the height direction (see direction Z in FIG. 4) and adjacent to the large face 2311, to be specific, the left wall surface or right wall surface of the electrode assembly 23. In a laminated electrode assembly 23, the side face 2312 may refer to a wall surface parallel to the lamination direction of the electrode plates. The area of the side face 2312 is typically smaller than the area of the large face 2311, and the side face 2312 may be an arcuate surface, a flat surface, or other shapes, with its specific shape determined based on the shape of the electrode assembly 23.

The side-face buffer portion 122 is a portion of the buffer body 120 that covers the side face 2312.

In the battery cell 20 of the embodiments of the present application, during the charging and discharging process of the electrode assembly 23, the side face 2312 swells and compresses the side-face buffer portion 122 to deform, thereby mitigating the swelling force of the side face 2312, and reducing the risk of wrinkling and lithium precipitation in the electrode assembly 23.

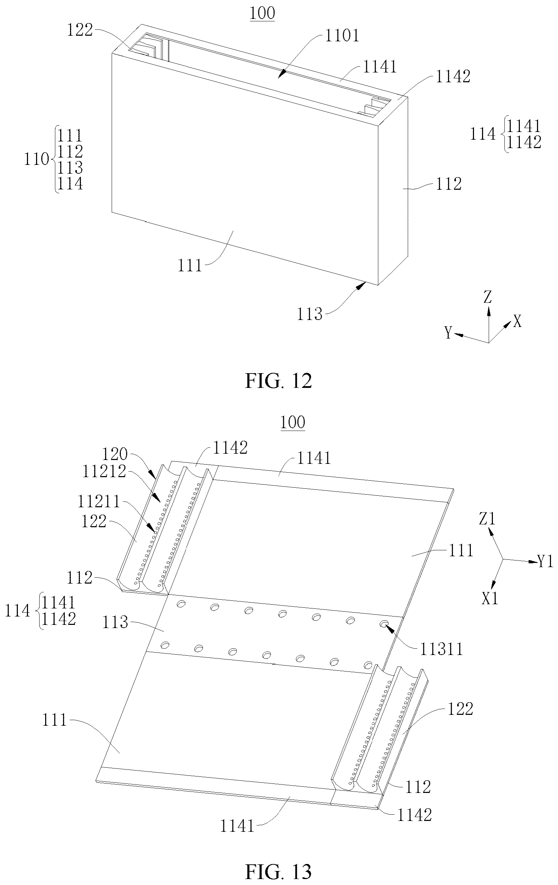

In another embodiment of the present application, as shown in FIGs. 3, 4, and 12, a projection of the side face 2312 of the provided battery cell 20 along a width direction of the electrode assembly 23 (see direction Y in FIG. 4) falls within a projection of the side-face buffer portion 122 along the width direction of the electrode assembly 23 (see direction Y in FIG. 12).

The projection of the side face 2312 along the width direction of the electrode assembly 23 falling within the projection of the side-face buffer portion 122 along the width direction of the electrode assembly 23 can be understood as follows: a projection plane perpendicular to the width direction of the electrode assembly 23 is defined, the side face 2312 projects along the width direction of the electrode assembly 23 onto the projection plane to obtain a first projection image, and the side-face buffer portion 122 projects along the width direction of the electrode assembly 23 onto the projection plane to obtain a second projection image, where the first projection image and the second projection image are identical and completely overlap, or the first projection image is located within the second projection image, meaning the side-face buffer portion 122 can completely cover the side face 2312.

In the battery cell 20 of the embodiments of the present application, during the swelling of the side face 2312, at least most regions of the side face 2312 can be in contact with and compress the side-face buffer portion 122, so that the side-face buffer portion 122 to mitigate the swelling force of most regions of the side face 2312. The swelling force of the side face 2312 is effectively mitigated, which is conducive to reducing the risk of wrinkling and lithium precipitation at the side face 2312 of the electrode assembly 23.

In another embodiment of the present application, as shown in FIGs. 4, 12, and 13, a surface of the side-face buffer portion 122 of the provided battery cell 20 facing the side face 2312 is configured with an accommodating groove 11212 for accommodating the side face 2312, and a groove wall of the accommodating groove 11212 is capable of fitting with the side face 2312.

The accommodating groove 11212 is a groove formed on the surface of the side-face buffer portion 122 facing the side face 2312, and the side face 2312 can be accommodated within the accommodating groove 11212.

The groove wall of the accommodating groove 11212 is capable of fitting with the side face 2312. It can be understood that the side face 2312 fits with the groove wall of the accommodating groove 11212 before swelling, or the side face 2312 fits with the groove wall of the accommodating groove 11212 during swelling. For example, by designing the shape of the groove wall of the accommodating groove 11212 to be the same or substantially the same as the shape of the side face 2312, the side face 2312 can fit with the groove wall of the accommodating groove 11212. For example, the side face 2312 of a wound electrode assembly 23 is an arcuate surface, and the groove wall of the accommodating groove 11212 is also an arcuate surface.

In the battery cell 20 of the embodiments of the present application, when the side face 2312 swells, the side face 2312 fits against the groove wall of the accommodating groove 11212, so that the side-face buffer portion 122 can mitigate the swelling force across the entire surface of the side face 2312, which is conducive to reducing the risk of wrinkling and lithium precipitation at the side face 2312 of the electrode assembly 23.

In another embodiment of the present application, as shown in FIGs. 9, 10, and 14, a thickness H₈ of the large-face buffer portion 121 of the provided battery cell 20 is greater than a thickness H₇ of the side-face buffer portion 122.

For example, as shown in FIG. 9, the large-face buffer portion 121 is a flat buffer pad, and thus the thickness H₈ of the large-face buffer portion 121 refers to the aforementioned H₂. For example, as shown in FIG. 10, the surface of the large-face buffer portion 121 is provided with the aforementioned arcuate surface 1211, and thus the thickness H₈ of the large-face buffer portion 121 refers to the aforementioned H₆.

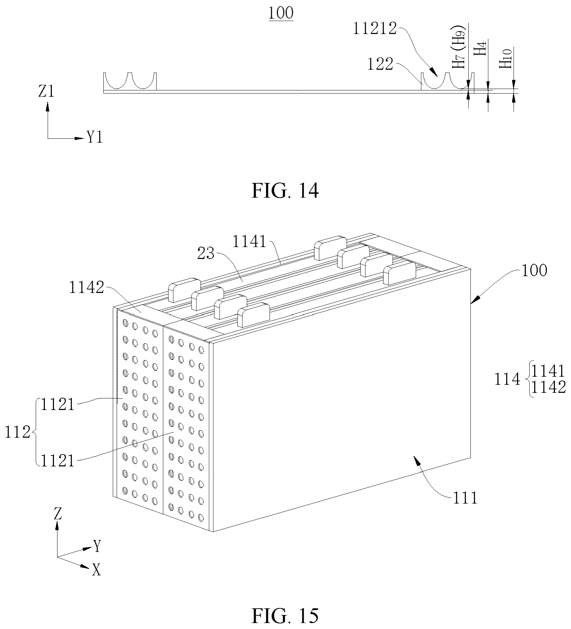

The side-face buffer portion 122 is a flat buffer pad, the thickness at the thickest part of the side-face buffer portion 122 equals the thickness at the thinnest part, and the thickness H₇ of the side-face buffer portion 122 equals the thickness at the thickest part or the thinnest part of the side-face buffer portion 122. For example, as shown in FIG. 14, the side-face buffer portion 122 is provided with the aforementioned accommodating groove 11212, and the thickness H₇ of the side-face buffer portion 122 refers to the thickness H₉ at the thinnest part, that is, the thickness at the lowest point of the bottom of the accommodating groove 11212.

In the battery cell 20 of the embodiments of the present application, during the charging process of the electrode assembly 23, the swelling amount at the large face 2311 is typically greater than the swelling amount at the side face 2312. A thicker large-face buffer portion 121 is designed corresponding to the larger swelling amount at the large face 2311, enabling the large-face buffer portion 121 to effectively mitigate the swelling force of the large face 2311. A thinner side-face buffer portion 122 is designed corresponding to the smaller swelling amount at the side face 2312, enabling the side-face buffer portion 122 to effectively mitigate the swelling force of the side face 2312. Additionally, designing buffer portions with different thicknesses for different regions allows for efficient use of the space in the mounting cavity 2111, which is conducive to increasing the energy density of the battery cell 20 and reducing manufacturing costs.

In another embodiment of the present application, as shown in FIGs. 4 and 14, a thickness of the electrode assembly 23 of the provided battery cell 20 is H₁, a thickness of the side-face buffer portion 122 is H₇, and 0.05 mm ≤ H₇ ≤ 0.67H₁.

In the battery cell 20 of the embodiments of the present application, through the setting of 0.05 mm ≤ H₇ ≤ 0.67H₁, the thickness H₇ of the side-face buffer portion 122 is greater than or equal to 0.05 mm, so that the side-face buffer portion 122 has a certain thickness to effectively mitigate the swelling force of the side face 2312. The upper limit of the thickness H₇ of the side-face buffer portion 122 is related to the thickness H₁ of the electrode assembly 23, allowing the side-face buffer portion 122 to correspondingly mitigate the swelling force of electrode assemblies 23 of different thicknesses, resulting in a lower risk of wrinkling and lithium precipitation in the electrode assembly 23. Additionally, a ratio of the thickness H₇ of the side-face buffer portion 122 to the thickness H₁ of the electrode assembly 23 is less than or equal to 0.67, allowing the thickness H₇ of the side-face buffer portion 122 to be designed relatively small, which is conducive to reducing material usage, lowering manufacturing costs, and reducing the space occupied by the side-face buffer portion 122 in the mounting cavity 2111, and is conducive to increasing the energy density of the battery cell 20.

In one embodiment, H₇ may include, but is not limited to, 0.05 mm, 0.1 mm, 0.15 mm, 0.2 mm, 0.25 mm, 0.3 mm, 0.05H₁, 0.1H₁, 0.15H₁, 0.2H₁, 0.25H₁, 0.3H₁, 0.35H₁, 0.4H₁, 0.45H₁, 0.5H₁, 0.55H₁, 0.6H₁, 0.65H₁, or 0.67H₁.

In another embodiment of the present application, as shown in FIGs. 4, 9, 10, and 14, a thickness of the electrode assembly 23 of the provided battery cell 20 is H₁, a thickness of the side-face buffer portion 122 is H₇, a thickness of the large-face buffer portion 121 is H₈, and 0.005 mm ≤ H₇ ≤ H₈ ≤ 0.67H₁.

In the battery cell 20 of the embodiments of the present application, through the setting of 0.05 mm ≤ H₇ ≤ H₈ ≤ 0.67H₁, both the thickness H₈ of the large-face buffer portion 121 and the thickness H₇ of the side-face buffer portion 122 are greater than or equal to 0.05 mm, so that both the large-face buffer portion 121 and the side-face buffer portion 122 have a certain thickness to mitigate the swelling force of the large face 2311 and the side face 2312, respectively, which is conducive to reducing the risk of wrinkling and lithium precipitation in the electrode assembly 23. Setting an upper limit for both the thickness H₈ of the large-face buffer portion 121 and the thickness H₇ of the side-face buffer portion 122, which is related to the thickness H₁ of the electrode assembly 23, allows the large-face buffer portion 121 and the side-face buffer portion 122 to correspondingly mitigate the swelling force of electrode assemblies 23 of different thicknesses, resulting in a lower risk of wrinkling and lithium precipitation in the electrode assembly 23. Moreover, a ratio of the thickness H₇ of the side-face buffer portion 122 to the thickness H₁ of the electrode assembly 23 is less than or equal to 0.67, and a ratio of the thickness H₇ of the large-face buffer portion 121 to the thickness H₁ of the electrode assembly 23 is less than or equal to 0.67, allowing the thickness H₈ of the large-face buffer portion 121 and the thickness H₇ of the side-face buffer portion 122 to be designed relatively small, which is conducive to reducing material usage, lowering manufacturing costs, and reducing the space occupied by the side-face buffer portion 122 and the large-face buffer portion 121 in the mounting cavity 2111, and is conducive to increasing the energy density of the battery cell 20.

In another embodiment of the present application, as shown in FIGs. 4, 9, 10, 13, and 14, a thickness at the thickest part of the large-face buffer portion 121 of the provided battery cell 20 is H₅, a thickness at the thinnest part of the side-face buffer portion 122 is H₉, a width of the electrode assembly 23 is L₁, and 0.05 mm ≤ H₅ ≤ H₉ ≤ 0.2L₁.

The thickness H₉ at the thinnest part of the side-face buffer portion 122, as shown in FIG. 9, may be a thickness at the lowest point of the accommodating groove 11212, that is, H₇.

In the battery cell 20 of the embodiments of the present application, through the design of 0.05 mm ≤ H₅ ≤ H₉ ≤ 0.2L₁, the thickness H₉ at the thinnest part of the side-face buffer portion 122 and the thickness H₅ at the thickest part of the large-face buffer portion 121 are greater than or equal to 0.05 mm, so that both the thinnest part of the side-face buffer portion 122 and the thickest part of the large-face buffer portion 121 have a certain thickness to mitigate the swelling force of the electrode assembly 23, reducing the risk of wrinkling and lithium precipitation. The thickness H₉ at the thinnest part of the side-face buffer portion 122 and the thickness H₅ at the thickest part of the large-face buffer portion 121 are both related to the width L₁ of the electrode assembly 23, allowing for reasonable thickness design for different regions, which is conducive to reducing material usage and lowering manufacturing costs, and is conducive to increasing the energy density of the battery 1100. Additionally, the thinnest part of the side-face buffer portion 122 is greater than or equal to the thickest part of the large-face buffer portion 121, and since the region of the large face 2311 is greater than the region of the side face 2312, the thickness corresponding to the larger area region is designed to be smaller, while the thickness corresponding to the smaller area region is designed to be larger, which also reduces material usage. Furthermore, the thickness H₉ at the thinnest part of the side-face buffer portion 122 and the thickness H₅ at the thickest part of the large-face buffer portion 121 are both less than or equal to 0.2 times the width L₁ of the electrode assembly 23. This allows the thickness H₉ at the thinnest part of the side-face buffer portion 122 and the thickness H₅ at the thickest part of the large-face buffer portion 121 to be selected within a corresponding thickness range based on the dimensions of different electrode assemblies 23, meeting the usage requirements of electrode assemblies 23 of varying sizes. Additionally, this limits the upper limits of the thickness H₉ at the thinnest part of the side-face buffer portion 122 and the thickness H₅ at the thickest part of the large-face buffer portion 121, which reduces the risk of excessive thickness, is conducive to reducing material usage and lowering manufacturing costs, and is conducive to increasing the energy density of the battery 1100 cell.

In another embodiment of the present application, as shown in FIGs. 4 and 12 to 14, the insulating body 110 of the provided battery cell 20 further includes a side-face region 112, the side-face region 112 covers the side face 2312, and the side-face region 112 is connected to the side-face buffer portion 122.

The side-face region 112 is a region of the insulating body 110 that covers the side face 2312. For example, as shown in FIG. 12, the side-face region 112 refers to the portion of the insulating body 110 parallel to the height direction (see direction Z in FIG. 4) and the thickness direction (see direction X in FIG. 12), to be specific, when the insulating body 110 envelops the electrode assembly 23, the side-face region 112 refers to the left wall or right wall of the insulating body 110.

The side-face region 112 is connected to the side-face buffer portion 122. It can be understood that a surface of the side-face region 112 facing the electrode assembly 23 is connected to the side-face buffer portion 122; or a surface of the side-face region 112 facing away from the electrode assembly 23 is connected to the side-face buffer portion 122; or both a surface of the side-face region 112 facing the electrode assembly 23 and a surface facing away from the electrode assembly 23 are connected to the side-face buffer portion 122. The side-face region 112 and the side-face buffer portion 122 may be connected by adhesion, thermal pressing, or other connection methods, with the specific connection method not limited herein.

In the battery cell 20 of the embodiments of the present application, the side-face region 112 can separate the side face 2312 from the housing 21, so that the side face 2312 of the electrode assembly 23 can be insulated from the housing 21, reducing the risk of short circuits.

In another embodiment of the present application, as shown in FIGs. 4 to 9, the sidewall 231 of the electrode assembly 23 of the provided battery cell 20 further includes two side faces 2312, the number of large faces 2311 is two, the two large faces 2311 are located on opposite sides of the electrode assembly 23, and the two side faces 2312 are located on another pair of opposite sides of the electrode assembly 23; the insulator 100 further includes a bottom-face region 113 and two side-face regions 112, the number of large-face regions 111 is two, the two large-face regions 111 respectively cover the two large faces 2311, the two side-face regions 112 respectively cover the two side faces 2312, and the bottom-face region 113 covers a bottom face 232 of the electrode assembly 23.

The two side faces 2312, as shown in FIG. 4, may refer to the left wall surface and the right wall surface of the electrode assembly 23, respectively.

The two large faces 2311, as shown in FIG. 4, may refer to the front wall surface and the rear wall surface of the electrode assembly 23, respectively.

The bottom face 232 of the electrode assembly 23, as shown in FIG. 4, refers to the lower wall surface of the electrode assembly 23.

The bottom-face region 113 refers to the portion of the insulator 100 that covers the bottom face 232 of the electrode assembly 23. For example, as shown in FIG. 5, the bottom-face region 113 refers to the bottom wall of the insulator 100.

The two large-face regions 111, as shown in FIG. 5, may refer to the front wall and the rear wall of the insulator 100, respectively.

The two side-face regions 112, as shown in FIG. 5, may refer to the left wall and the right wall of the insulator 100, respectively.

As shown in FIG. 5, when the insulator 100 envelops the electrode assembly 23, the insulator 100 forms a cuboidal box shape, with the two large-face regions 111, the two side-face regions 112, and the bottom-face region 113 together forming an accommodating cavity 1101 with an opening at the top. The electrode assembly 23 is accommodated within this accommodating cavity 1101, with the two large-face regions 111 respectively covering the two large faces 2311, the two side-face regions 112 respectively covering the two side faces 2312, and the bottom-face region 113 covering the bottom face 232 of the electrode assembly 23, thereby achieving insulation protection for the electrode assembly 23.

As shown in FIG. 6, when the insulator 100 is in an unfolded state, the two large-face regions 111 are respectively connected to the front and rear edges of the bottom-face region 113, and the side-face region 112 includes two side-face portions 1121, where the two side-face portions 1121 of one side-face region 112 are respectively connected to the left edges of the two large-face regions 111, and the two side-face portions 1121 of the other side-face region 112 are respectively connected to the right edges of the two large-face regions 111. Alternatively, as shown in FIG. 13, when the insulator 100 is in an unfolded state, the two large-face regions 111 are respectively connected to the front and rear edges of the bottom-face region 113, with one side-face region 112 connected to the right edge of the front large-face region 111, and the other side-face region 112 connected to the left edge of the rear large-face region 111. In other embodiments, the arrangement of the bottom-face region 113, the two large-face regions 111, and the two side-face regions 112 may take other forms, as long as the insulator 100, when folded, can form a box-shaped structure with an accommodating cavity 1101. The specific form is not limited herein. For example, the arrangement of the bottom-face region 113, the two large-face regions 111, and the two side-face regions 112 may refer to the unfolded layout of a cuboid.

In the battery cell 20 of the embodiments of the present application, the two large-face regions 111 and the two side-face regions 112 can completely cover the sidewall 231 of the electrode assembly 23, and the bottom-face region 113 covers the bottom face 232 of the electrode assembly 23, thereby fully insulating and separating the electrode assembly 23 from the housing 21.

In another embodiment of the present application, as shown in FIGs. 4 and 5, a width of the side-face region 112 of the provided battery cell 20 is E₁, a thickness of the electrode assembly 23 is H₁, the number of electrode assemblies 23 enveloped within the insulating body 110 is N₂, a sum of thicknesses of all large-face buffer portions 121 located between the two large-face regions 111 is A, a thickness of the large-face region 111 is H₃, and N₂×H₁ < E₁ ≤ 1.05×N₂×H₁ + A + 2H₃.

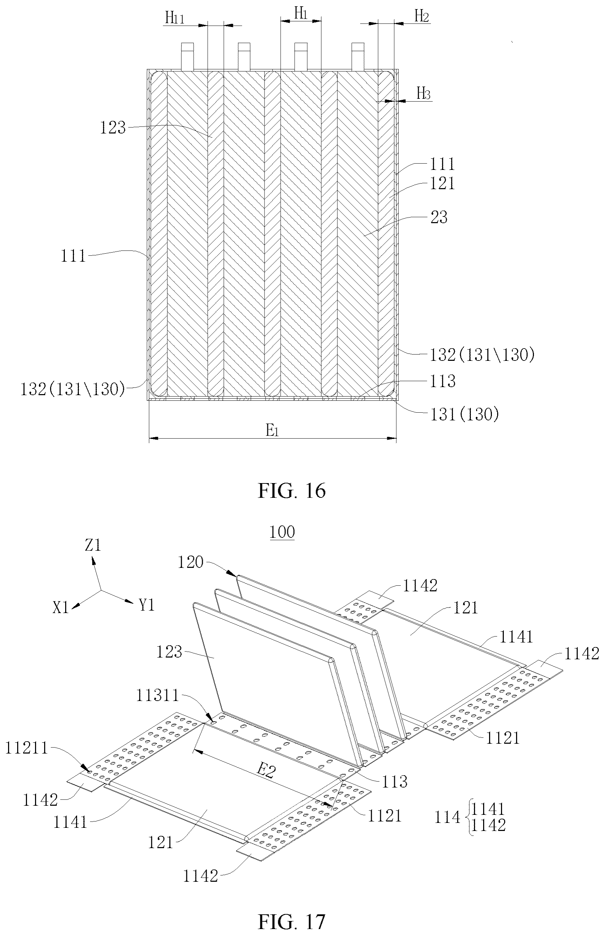

The width E₁ of the side-face region 112 may refer to the dimension of the side-face region 112 parallel to the thickness direction of the electrode assembly 23 (see direction X in FIG. 5). For example, as shown in FIG. 16, the width E₁ of the side-face region 112 may also refer to the distance between the surfaces of the two large-face regions 111 facing away from each other.

The sum A of the thicknesses of all large-face buffer portions 121 located between the two large-face regions 111 may refer to the sum of the thicknesses of the large-face buffer portions 121 connected to the surface of the large-face region 111 facing the electrode assembly 23, that is, the number of large-face buffer portions 121 located between the two large-face regions 111 multiplied by the thickness H₂ of the large-face buffer portion 121.

N₂×H₁ can be understood as the sum of the thicknesses H₁ of all electrode assemblies 23, where the number of electrode assemblies 23 may be one, two, three, or more, selected based on actual needs.

E₁ ≥ N₂×H₁ indicates that there is sufficient space between the two large-face regions 111 to accommodate all electrode assemblies 23, and this space can be designed to be sufficiently large to reduce the risk of excessive pressure on the electrode assembly 23.

E₁ ≤ 1.05×N₂×H₁ + A+ 2H₃ implies E₁ - (A + 2H₃) ≤ 1.05×N₂×H₁, meaning the spacing between the two large-face regions 111 can be designed to be slightly larger than the sum of the thicknesses H₁ of all electrode assemblies 23.

In the battery cell 20 of the embodiments of the present application, through the design of N₂×H₁ < E₁ ≤ 1.05×N₂×H₁ + A + 2H₃, sufficient space is ensured between the two large-face regions 111 to accommodate the electrode assembly 23, reducing the pressure exerted by the two large-face regions 111 on the electrode assembly 23, thereby minimizing the risk of excessive pressure on the electrode assembly 23. The spacing between the two large-face regions 111 can be designed to be slightly larger than the sum of the thicknesses H₁ of all electrode assemblies 23, allowing the two large-face regions 111 to provide support to the electrode assembly 23, ensuring stable envelopment of the electrode assembly 23 within the insulator 100. Additionally, it provides certain installation space for the intermediate buffer portion 123, mitigating the swelling force of the large face 2311, and improving the cycling performance of the battery 1100.

In another embodiment of the present application, as shown in FIGs. 15, 16, and 17, a width of the side-face region 112 of the provided battery cell 20 is E₁, a thickness of the electrode assembly 23 is H₁, the number of electrode assemblies 23 enveloped within the insulating body 110 is N₂, a sum of thicknesses of all large-face buffer portions 121 located between the two large-face regions 111 is A, and when N₂ ≥ 2, the buffer body 120 further includes intermediate buffer portions 123, with each intermediate buffer portion 123 located between two adjacent electrode assemblies 23, a sum of thicknesses of all intermediate buffer portions 123 is B, where N₂×H₁ < E₁ ≤ 1.05×N₂×H₁ + A + B + 2H₃.

The intermediate buffer portion 123 may refer to the portion of the buffer body 120 located between two adjacent electrode assemblies 23.

The sum B of the thicknesses of all intermediate buffer portions 123 may refer to the number of intermediate buffer portions 123 located between the two large-face regions 111 multiplied by the thickness H₁₁ of the intermediate buffer portion 123.

E₁ ≤ 1.05×N₂×H₁ + A + B + 2H₃ implies E₁ - (A+ 2H₃) ≤ 1.05×N₂×H₁ + B, meaning the spacing between the two large-face regions 111 can be designed to be slightly larger than the sum of the thicknesses H₁ of all electrode assemblies 23 plus the sum B of the thicknesses of all intermediate buffer portions 123.

In the battery cell 20 of the embodiments of the present application, through the design of N₂×H₁ < E₁ ≤ 1.05×N₂×H₁ + A + B + 2H₃, sufficient space is ensured between the two large-face regions 111 to accommodate the electrode assembly 23, reducing the pressure exerted by the two large-face regions 111 on the electrode assembly 23, thereby minimizing the risk of excessive pressure on the electrode assembly 23. The spacing between the two large-face regions 111 can be designed to be slightly larger than the sum of the thicknesses H₁ of all electrode assemblies 23 plus the sum of the thicknesses of all intermediate buffer portions 123, allowing the two large-face regions 111 to provide support to the electrode assembly 23, ensuring stable envelopment of the electrode assembly 23 within the insulator 100. Additionally, it provides sufficient installation space for the intermediate buffer portion 123, mitigating the swelling force of the large face 2311, and improving the cycling performance of the battery 1100.

In another embodiment of the present application, as shown in FIGs. 4 to 6, a length of the bottom-face region 113 of the provided battery cell 20 is E₂, a width of the electrode assembly 23 is L₁, a thickness of the side-face region 112 is H₄, and L₁ < E₂ ≤ 1.05Li + 2H₄.

The length E₂ of the bottom-face region 113 may refer to the dimension of the bottom-face region 113 parallel to the width direction (see direction Y1 in FIG. 7). For example, as shown in FIG. 5, the length E₂ of the bottom-face region 113 may also refer to the distance between the surfaces of the two side-face regions 112 facing away from each other.

E₂ > L₁ indicates that there is sufficient space between the two side-face regions 112 to accommodate the electrode assembly 23, and this space can be designed to be sufficiently large to reduce the risk of excessive pressure on the electrode assembly 23.

E₂ ≤ 1.05L₁ + 2H₄ implies E₁ - 2H₄ ≤ 1.05L₁, meaning the spacing between the two side-face regions 112 can be designed to be slightly larger than the width L₁ of the electrode assembly 23.

In the battery cell 20 of the embodiments of the present application, through the design of L₁ < E₂ ≤ 1.05L₁ + 2H₄, sufficient space is ensured between the two side-face regions 112 to accommodate the electrode assembly 23, reducing the pressure exerted by the two side-face regions 112 on the electrode assembly 23, thereby minimizing the risk of excessive pressure on the electrode assembly 23. Through the design of E₂ ≤ 1.05L₁ + 2H₄, the spacing between the two side-face regions 112 is less than or equal to 1.05 times the width L₁ of the electrode assembly 23, meaning the spacing between the two side-face regions 112 can be slightly larger than the width L₁ of the electrode assembly 23. This allows the two side-face regions 112 to support both sides of the electrode assembly 23, ensuring stable envelopment of the electrode assembly 23 within the insulator 100. Additionally, it provides installation space for the side-face buffer portion 122, reducing the risk of excessive pressure on the side-face buffer portion 122, enabling the side-face buffer portion 122 to cushion the swelling force of the side face 2312.

In another embodiment of the present application, as shown in FIGs. 4 and 5, a height L2 of the side-face region 112 of the provided battery cell 20 is greater than a height L3 of the electrode assembly 23.

In the battery cell 20 of the embodiments of the present application, the height L2 of the side-face region 112 being greater than the height L3 of the electrode assembly 23 allows the side-face region 112 to completely cover the side face 2312 of the electrode assembly 23, achieving insulation between the side face 2312 and the housing 21.

In another embodiment of the present application, as shown in FIG. 14, a thickness of the insulator 100 at the side-face region 112 of the provided battery cell 20 is H₁₀, and 0.05 mm ≤ H₁₀ ≤ 2 mm.

The thickness H₁₀ of the insulator 100 at the side-face region 112 can be understood as follows: when the side-face region 112 is not connected to the side-face buffer portion 122, the thickness H₁₀ of the insulator 100 at the side-face region 112 equals the thickness H₄ of the side-face region 112; when the side-face region 112 is connected to the side-face buffer portion 122, the thickness H₁₀ of the insulator 100 at the side-face region 112 equals the thickness H₄ of the side-face region 112 plus the thickness H₇ at the thinnest part of the side-face buffer portion 122.

In the battery cell 20 of the embodiments of the present application, through the design of 0.05 mm ≤ H₁₀ ≤ 2 mm, the thickness H₁₀ of the insulator 100 at the side-face region 112 is set within a reasonable range, enabling the insulator 100 to provide good support to the electrode assembly 23 at the side-face region 112, with a suitable thickness that does not occupy excessive space, facilitating improved energy density of the battery cell 20.

In one embodiment, H₁₀ may include, but is not limited to, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, or 2 mm.

In another embodiment of the present application, as shown in FIGs. 3, 5, and 7, the housing 21 of the provided battery cell 20 includes a shell 211 and an end cover 212, the end cover 212 covers an opening of the shell 211 and forms the mounting cavity 2111 together with the shell 211; the insulating body 110 further includes a first top-face portion 1141 configured to connect with the end cover 212 and connect with the large-face region 111, the number of electrode assemblies 23 enveloped within the insulating body 110 is N₂, a width of the first top-face portion 1141 is E₃, a thickness of the electrode assembly 23 is H₁, and 0.1×N₂×H₁ ≤ E₃ ≤ 0.5×N₂×H₁.

The end cover 212 refers to a component that covers the opening of the shell 211, sealing the mounting cavity 2111 by covering the shell 211, thereby isolating the internal components of the battery cell 20, such as the electrode assembly 23 and the insulator 100, from the external environment, achieving sealing of the housing 21.

The first top-face portion 1141 refers to the area of the insulator 100 that connects with the end cover 212 and is connected to the large-face region 111. For example, as shown in FIG. 6, the first top-face portion 1141 is connected to the edge of the large-face region 111 facing away from the bottom-face region 113. The insulator 100 includes a top-face region 114 connected to the end cover 212, the top-face region 114 including the first top-face portion 1141 and a second top-face portion 1142, with both large-face regions 111 connected to the first top-face portion 1141, and the side-face portions 1121 located on the left and right sides of the large-face region 111 connected to the second top-face portion 1142. For example, as shown in FIG. 13, both large-face regions 111 are connected to the first top-face portion 1141, and the side-face regions 112 located on the left and right sides of the large-face region 111 are connected to the second top-face portion 1142. When the insulator 100 envelops the electrode assembly 23, the first top-face portion 1141 and the second top-face portion 1142 rest against the top face 233 of the electrode assembly 23 and together form a ring-shaped structure, which is thermally bonded to the surface of the end cover 212 facing the electrode assembly 23, thereby fixing the insulator 100. Alternatively, the first top-face portion 1141 and the second top-face portion 1142 together form a ring-shaped structure, with the end cover 212 located within this ring-shaped structure, and the ring-shaped structure is connected to the outer peripheral wall of the end cover 212, thereby fixing the insulator 100. The first top-face portion 1141 may be provided with a clearance area to avoid the tabs of the electrode assembly 23, reducing interference by the insulator 100 with the electrical connection between the tabs and the electrode terminals 22. The shapes of the first top-face portion 1141 and the second top-face portion 1142 may vary, such as rectangular, trapezoidal, or chevron-shaped, as long as they enable stable connection between the insulator 100 and the end cover 212.

The width E₃ of the first top-face portion 1141, as shown in FIG. 5, may refer to the dimension of the first top-face portion 1141 along the X direction, or the dimension of the first top-face portion 1141 in the thickness direction of the electrode assembly 23 (see direction X in FIG. 4).

N₂×H₁ can be understood as the sum of the thicknesses H₁ of all electrode assemblies 23 enveloped within the insulator 100.

In the battery cell 20 of the embodiments of the present application, through the design of 0.1×N₂×H₁ ≤ E₃ ≤ 0.5×N₂×H₁, the ratio of the width E₃ of the first top-face portion 1141 to the sum of the thicknesses H₁ of all electrode assemblies 23 is greater than or equal to 0.1, ensuring that the first top-face portion 1141 has a certain area for connection with the end cover 212, enabling a secure connection between the end cover 212 and the first top-face portion 1141, allowing the insulator 100 to be stably fixed within the shell 211, thereby improving the cycle stability and reliability of the battery cell 20. Additionally, the width E₃ of the first top-face portion 1141 is less than or equal to half the sum of the thicknesses H₁ of all electrode assemblies 23, so that, as shown in FIG. 5, the two first top-face portions 1141 located on opposite sides of the electrode assembly 23 do not overlap when covering the electrode assembly 23, reducing redundancy and the risk of obstructing the tabs.

In another embodiment of the present application, each edge of the large-face regions 111 and each edge of the side-face regions 112 of the provided battery cell 20 are connected to a bottom-face portion. When the insulator 100 envelops the electrode assembly 23, the multiple bottom-face portions can cover the bottom face 232 of the electrode assembly 23, with the specific covering method similar to the overlapping closure of a box bottom. The shape of the bottom-face portion may vary, such as rectangular, trapezoidal, or chevron-shaped, as long as it can cover the bottom face 232 of the electrode assembly 23.

In another embodiment of the present application, as shown in FIG. 16, at least one of the bottom-face region 113, the side-face region 112, and the large-face region 111 of the provided battery cell 20 is covered with a functional layer 130 for enhancing the performance of the battery cell 20.

At least one of the bottom-face region 113, the side-face region 112, and the large-face region 111 being covered with a functional layer 130 can be understood as follows: any one of the bottom-face region 113, the side-face region 112, and the large-face region 111 may be covered with the functional layer 130, any two of the bottom-face region 113, the side-face region 112, and the large-face region 111 may be covered with the functional layer 130, or all of the bottom-face region 113, the side-face region 112, and the large-face region 111 may be covered with the functional layer 130.

The functional layer 130 refers to a layer structure capable of improving the performance of the battery cell 20. For example, the functional layer 130 may be a layer structure with good thermal conductivity, thermal insulation, insulation, or buffering performance.

In the battery cell 20 of the embodiments of the present application, the functional layer 130 can enhance the performance of the battery cell 20.

In another embodiment of the present application, as shown in FIG. 16, the functional layer 130 of the provided battery cell 20 includes a thermally conductive layer 131, and the thermally conductive layer 131 covers the bottom-face region 113.

The thermally conductive layer 131 refers to a layer structure made of a material with good thermal conductivity. To quickly dissipate the heat of the battery cell 20 to the outside, the thermal conductivity of the thermally conductive layer 131 needs to be greater than that of the insulating body 110 and the buffer body 120. For example, the thermally conductive layer 131 may be a thermally conductive silicone sheet.

In the battery cell 20 of the embodiments of the present application, the thermally conductive layer 131 covering the bottom-face region 113 can improve heat dissipation at the bottom of the electrode assembly 23, and reduce the risk of thermal failure in the battery cell 20.

In another embodiment of the present application, as shown in FIG. 16, the functional layer 130 of the provided battery cell 20 includes a thermally conductive layer 131, and the thermally conductive layer 131 covers the large-face region 111.

In the battery cell 20 of the embodiments of the present application, when multiple battery cells 20 are grouped, the large-face regions 111 of two adjacent battery cells 20 are positioned opposite each other, allowing the thermally conductive layer 131 to accelerate heat conduction between the two adjacent battery cells 20, reducing the temperature difference between them, which helps to improve the temperature consistency of the grouped battery cells 20, facilitates system thermal management of the battery cells 20, and improves the service life of the battery cells 20.

In another embodiment of the present application, as shown in FIG. 16, the functional layer 130 of the provided battery cell 20 includes a thermally conductive layer 131, and both the large-face region 111 and the bottom-face region 113 are covered with the thermally conductive layer 131.

In the battery cell 20 of the embodiments of the present application, the thermally conductive layer 131 covering the bottom-face region 113 can enhance heat dissipation at the bottom of the electrode assembly 23, reducing the risk of thermal failure, while the large-face region 111 is covered with the functional layer 130 of the thermally conductive layer 131, which can accelerate heat conduction between two adjacent battery cells 20 in a grouped configuration, reduce the temperature difference between them, help to improve the temperature consistency of the grouped battery cells 20, facilitate system thermal management of the battery cells 20, and improve the service life of the battery cells 20.

In another embodiment of the present application, as shown in FIG. 16, the functional layer 130 of the provided battery cell 20 further includes a thermal insulation layer 132, and the thermal insulation layer 132 covers the large-face region 111.

The thermal insulation layer 132 refers to a layer structure made of a thermal insulating material, such as an aerogel insulating material.

In the battery cell 20 of the embodiments of the present application, the large face 2311 is covered with a thermal insulation layer 132, which can impede the outward transfer of heat generated by the electrode assembly 23, thereby helping to control the spread of heat after thermal runaway of a single battery cell 20, reducing the risk of thermal failure in other battery cells 20 triggered by the thermal failure of a single battery cell 20, and improving the reliability of grouped battery cells 20.

In another embodiment of the present application, as shown in FIG. 6, the side-face region 112 of the provided battery cell 20 is configured with a second through-hole 11211, the second through-hole 11211 enabling an electrolyte to flow to the side face 2312.

The second through-hole 11211 may refer to a through-hole penetrating the side-face region 112. For example, as shown in FIG. 6, the second through-hole 11211 penetrates the side-face region 112 along the thickness direction of the side-face region 112. Alternatively, the second through-hole 11211 may penetrate the side-face region 112 obliquely or in a curved manner, and the shape of the second through-hole 11211 may vary, such as circular, triangular, or quadrilateral. The specific structure of the second through-hole 11211 may be set based on actual needs and is not limited herein. If the side-face region 112 is connected to the side-face buffer portion 122, the second through-hole 11211 penetrates the side-face buffer portion 122, enabling the electrolyte to flow through the side-face buffer portion 122 to the side face 2312 of the electrode assembly 23.

In the battery cell 20 of the embodiments of the present application, the electrolyte can pass through the second through-hole 11211 to traverse the side-face region 112, replenishing the electrode assembly 23 with the electrolyte, reducing the risk of loss of continuity in the electrode assembly 23, and improving the service life of the battery cell 20.

In another embodiment of the present application, as shown in FIG. 6, the bottom-face region 113 of the provided battery cell 20 is configured with a third through-hole 11311, the third through-hole 11311 enabling an electrolyte to flow to the bottom face 232 of the electrode assembly 23.

The third through-hole 11311 may refer to a through-hole penetrating the bottom-face region 113. For example, as shown in FIG. 6, the third through-hole 11311 penetrates the bottom-face region 113 along the thickness direction of the bottom-face region 113. Alternatively, the third through-hole 11311 may penetrate the bottom-face region 113 obliquely or in a curved manner, and the shape of the third through-hole 11311 may vary, such as circular, triangular, or quadrilateral. The specific structure of the third through-hole 11311 may be set based on actual needs and is not limited herein. If the bottom-face region 113 is connected to a buffer pad, the third through-hole 11311 penetrates the buffer pad, enabling the electrolyte to flow through the buffer pad to the bottom face 232 of the electrode assembly 23.

In the battery cell 20 of the embodiments of the present application, the bottom-face region 113 is provided with a third through-hole 11311, and the electrolyte can pass through the third through-hole 11311 to traverse the bottom-face region 113, replenishing the electrode assembly 23 with the electrolyte, reducing the risk of loss of continuity in the electrode assembly 23, and improving the service life of the battery cell 20.

In another embodiment of the present application, as shown in FIG. 6, the side-face region 112 of the provided battery cell 20 is configured with a second through-hole 11211, the second through-hole 11211 enabling an electrolyte to flow to the side face 2312; and the bottom-face region 113 is configured with a third through-hole 11311, the third through-hole 11311 enabling an electrolyte to flow to the bottom face 232 of the electrode assembly 23.

In the battery cell 20 of the embodiments of the present application, the electrolyte can pass through the second through-hole 11211 and the third through-hole 11311 to replenish electrolyte to the electrode assembly 23, providing a large replenishment area and better replenishment effect, further improving the service life of the battery cell 20.

In another embodiment of the present application, as shown in FIGs. 15 to 18, the buffer body 120 of the provided battery cell 20 further includes an intermediate buffer portion 123, the number of electrode assemblies 23 is multiple, the multiple electrode assemblies 23 are stacked along a thickness direction of the electrode assembly 23 (see direction X in FIG. 15) to form an electrode module, the insulating body 110 envelops the electrode module, and the intermediate buffer portion 123 is disposed between two adjacent electrode assemblies 23.

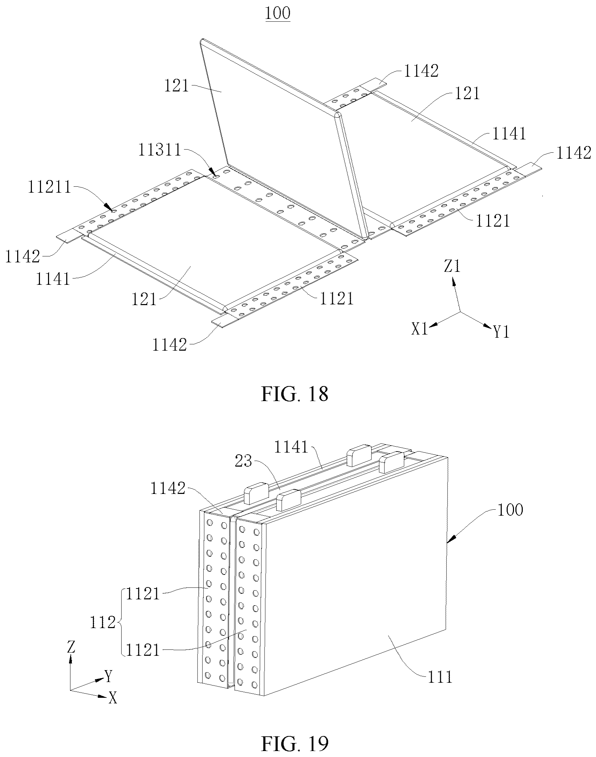

The electrode module refers to a component formed by stacking multiple electrode assemblies 23 along the thickness direction of the electrode assembly 23 (see direction X in FIG. 15). Typically, a battery cell 20 includes multiple electrode assemblies 23 to increase the power of the battery cell 20. An electrode module may include two, three, or four or more electrode assemblies 23, with the specific number determined based on actual power requirements. For example, an electrode module includes two electrode assemblies 23 stacked along the thickness direction of the electrode assembly 23 (see direction X in FIG. 19). Alternatively, an electrode module includes four electrode assemblies 23 stacked along the thickness direction of the electrode assembly 23 (see direction X in FIG. 15). Additionally, a battery cell 20 may include one, two, or three or more electrode modules, with the specific number determined based on actual power requirements and not limited herein.

The insulating body 110 enveloping the electrode module can be understood as the insulating body 110 enveloping the electrode module, insulating and separating the electrode module from the shell 211, reducing the risk of short circuits.

The intermediate buffer portion 123 being disposed between two adjacent electrode assemblies 23 can be understood as the intermediate buffer portion 123 being located between the sidewalls 231 of two adjacent electrode assemblies 23, with the electrode assemblies 23 stacked along the thickness direction of the electrode assembly 23 (see direction X in FIG. 15).

In the battery cell 20 of the embodiments of the present application, the intermediate buffer portion 123 is disposed between two adjacent electrode assemblies 23, and the swelling of the two adjacent electrode assemblies 23 compresses the intermediate buffer portion 123 from opposite sides, causing deformation, whereby the intermediate buffer portion 123 can mitigate the swelling force of the two adjacent electrode assemblies 23, reducing the risk of wrinkling and lithium precipitation in the electrode assemblies 23.

In another embodiment of the present application, as shown in FIGs. 17 and 18, at least one edge of the intermediate buffer portion 123 of the provided battery cell 20 is connected to the insulating body 110.

The connection of at least one edge of the intermediate buffer portion 123 to the insulating body 110 can be understood as one, two, three, or more edges of the intermediate buffer portion 123 being connected to the insulating body 110, with the specific configuration determined based on actual needs and not limited herein.

In the battery cell 20 of the embodiments of the present application, the edge of the intermediate buffer portion 123 is connected to the insulating body 110, resulting in a simple structure for the insulator 100, facilitating straightforward processing and manufacturing.

In another embodiment of the present application, as shown in FIGs. 19 to 22, multiple intermediate buffer portions 123 are disposed between two adjacent electrode assemblies 23 of the provided battery cell 20, and the multiple intermediate buffer portions 123 are stacked along the thickness direction of the electrode assembly 23 (see direction X in FIG. 19).

The provision of multiple intermediate buffer portions 123 between two adjacent electrode assemblies 23 can be understood as two, three, or four or more intermediate buffer portions 123 being disposed between two adjacent electrode assemblies 23, with the specific number determined based on the actual usage requirements of the battery cell 20 and not limited herein. The multiple intermediate buffer portions 123 are stacked along the thickness direction of the electrode assembly 23, meaning the stacking direction of the electrode assemblies 23 is the same as the stacking direction of the intermediate buffer portions 123. This allows the two adjacent electrode assemblies 23 to respectively compress the intermediate buffer portions 123 at both ends, pressing the intermediate buffer portions 123 at both ends toward the intermediate buffer portions 123 in the middle, enabling the two adjacent electrode assemblies 23 to be buffered by the multiple intermediate buffer portions 123.

In the battery cell 20 of the embodiments of the present application, the multiple intermediate buffer portions 123 are stacked along the thickness direction of the electrode assembly 23, allowing the swelling of two adjacent electrode assemblies 23 to be buffered by the multiple intermediate buffer portions 123, resulting in a better buffering effect for the electrode assembly 23, which is conducive to reducing the risk of wrinkling and lithium precipitation in the electrode assembly 23.

In another embodiment of the present application, as shown in FIGs. 19 to 21, the intermediate buffer portions 123 of the provided battery cell 20 are sequentially connected such that the stacked multiple intermediate buffer portions 123 are capable of being unfolded; the insulating body 110 includes a first insulating portion 1131 and a second insulating portion 1132, the first insulating portion 1131 and the second insulating portion 1132 respectively covering two adjacent electrode assemblies 23; and when the multiple intermediate buffer portions 123 are in an unfolded state, a first one of the intermediate buffer portions 123 is connected to the first insulating portion 1131, a last one of the intermediate buffer portions 123 is connected to the second insulating portion 1132, and the first insulating portion 1131 and the second insulating portion 1132 are capable of moving away from each other as the multiple intermediate buffer portions 123 are unfolded.

The sequential connection of the intermediate buffer portions 123, enabling the stacked multiple intermediate buffer portions 123 to be unfolded, can be understood as follows: when two adjacent intermediate buffer portions 123 move relatively apart, the stacked multiple intermediate buffer portions 123 can be unfolded; when two adjacent intermediate buffer portions 123 move relatively closer, the multiple intermediate buffer portions 123 can be stacked together, allowing insertion between two adjacent electrode assemblies 23. The stacked arrangement of the intermediate buffer portions 123 reduces the space occupied by the multiple intermediate buffer portions 123 within the battery cell 20, improving volume utilization. Adjacent intermediate buffer portions 123 may be connected by an elastic member, utilizing the bending of the elastic member to achieve unfolding and stacking of the multiple intermediate buffer portions 123, where the elastic member may be a rubber or silicone component. Alternatively, a crease may be provided between adjacent intermediate buffer portions 123 to enable relative unfolding and stacking through the crease. The multiple intermediate buffer portions 123 may also be made from a single piece of soft buffer material, leveraging the flexible bending characteristics of the soft buffer material to achieve stacking and unfolding of the multiple intermediate buffer portions 123. In other embodiments, other connection methods may be used, and these are not limited herein.

The first insulating portion 1131 refers to the portion of the insulating body 110 covering one of the two adjacent electrode assemblies 23, and the second insulating portion 1132 refers to the portion of the insulating body 110 covering the other of the two adjacent electrode assemblies 23. The first insulating portion 1131 and the second insulating portion 1132 are respectively connected to the intermediate buffer portions 123 at both ends, and the first insulating portion 1131 and the second insulating portion 1132 are capable of moving away from each other as the intermediate buffer portions 123 are unfolded, allowing the stacked multiple intermediate buffer portions 123 to unfold smoothly, facilitating the storage and accommodation of the insulator 100. For example, the first insulating portion 1131 and the second insulating portion 1132 may be disconnected to reduce interference, facilitating the unfolding of the stacked multiple intermediate buffer portions 123. Alternatively, the first insulating portion 1131 and the second insulating portion 1132 may be connected by an elastic member, enabling relative separation of the first insulating portion 1131 and the second insulating portion 1132 by stretching the elastic member. The elastic restoring force of the elastic member can also enable automatic convergence of the first insulating portion 1131 and the second insulating portion 1132, achieving automatic stacking of the multiple intermediate buffer portions 123, where the elastic member may be a rubber or silicone component.

In the battery cell 20 of the embodiments of the present application, the stacked multiple intermediate buffer portions 123 can be unfolded, facilitating the storage and accommodation of the insulator 100.

In another embodiment of the present application, the insulating body 110 of the provided battery cell 20 includes multiple third insulating portions 115 located between two adjacent electrode assemblies 23, the multiple third insulating portions 115 are stacked along the thickness direction of the electrode assembly 23, the third insulating portions 115 are sequentially connected such that the stacked multiple third insulating portions 115 are capable of being unfolded, and at least one third insulating portion 115 is connected to an intermediate buffer portion 123.

The third insulating portion 115 refers to one layer in a stacked structure of the insulator 100 located between two adjacent electrode assemblies 23 and stacked along the thickness direction of the electrode assembly 23. The third insulating portions 115 are sequentially connected, allowing adjacent third insulating portions 115 to move relatively apart, enabling the stacked multiple third insulating portions 115 to unfold, facilitating unfolding, storage, and accommodation of the insulator 100. When adjacent third insulating portions 115 move relatively closer, the multiple third insulating portions 115 can be stacked together for insertion between two adjacent electrode assemblies 23, reducing the space occupied by the multiple third insulating portions 115 within the battery cell 20 and improving volume utilization. For example, the insulating body 110 may be made of a soft insulating material, leveraging the flexible bending characteristics of the soft insulating material to achieve stacking and unfolding of the multiple third insulating portions 115, resulting in a simple structure that is easy to process and manufacture without requiring additional connection structures. Alternatively, adjacent third insulating portions 115 may be connected by an elastic member, utilizing the bending of the elastic member to achieve unfolding and stacking of the multiple third insulating portions 115, where the elastic member may be a rubber or silicone component. A crease may also be provided between adjacent third insulating portions 115 to enable relative unfolding and stacking through the crease. In other embodiments, other connection methods may be used, and these are not limited herein.

The multiple third insulating portions 115 can be understood as having two, three, or four or more third insulating portions 115, with the specific number determined based on actual design needs and not limited herein.

At least one third insulating portion 115 being connected to an intermediate buffer portion 123 can be understood as follows: during the unfolding of the multiple third insulating portions 115, the intermediate buffer portion 123 connected to the third insulating portion 115 flattens accordingly, enabling the unfolding of the insulator 100 for convenient storage. When the multiple third insulating portions 115 are stacked, the intermediate buffer portion 123 connected to the third insulating portion 115 folds accordingly and can be inserted between two adjacent electrode assemblies 23 to mitigate the swelling of the two adjacent electrode assemblies 23, reducing the risk of wrinkling and lithium precipitation in the electrode assembly 23. At least one third insulating portion 115 means that the number of third insulating portions 115 connected to intermediate buffer portions 123 may be one, two, or three or more, determined based on actual design needs. For example, both opposite side faces 2312 of the third insulating portion 115 may be connected to intermediate buffer portions 123, with a greater number of intermediate buffer portions 123 providing a better effect in mitigating the swelling force of the electrode assembly 23. In other embodiments, an intermediate buffer portion 123 may be provided on one side face 2312 of the third insulating portion, with the specific configuration designed based on actual needs and not limited herein. The intermediate buffer portion 123 and the insulating body 110 may be connected by adhesion, thermal pressing, or other methods.

In the battery cell 20 of the embodiments of the present application, the third insulating portion 115 disposed between two adjacent electrode assemblies 23 can insulate the two adjacent electrode assemblies 23, reducing the risk of short circuits. The unfolding of the multiple stacked third insulating portions 115 drives the intermediate buffer portion 123 connected to the third insulating portion 115 to flatten, enabling the unfolding of the insulator 100 for convenient storage. Additionally, the intermediate buffer portion 123 connected to the third insulating portion 115 can mitigate the swelling force of the two adjacent electrode assemblies 23, reducing the risk of wrinkling and lithium precipitation in the electrode assembly 23.

In another embodiment of the present application, as shown in FIGs. 7 to 9, a surface of the insulating body 110 of the provided battery cell 20 facing the electrode assembly 23 is connected to the buffer body 120.

In the battery cell 20 of the embodiments of the present application, the surface of the insulating body 110 facing the electrode assembly 23 is connected to the buffer body 120, meaning the buffer body 120 is located between the insulating body 110 and the sidewall 231 of the electrode assembly 23. The buffer body 120 is positioned close to the sidewall 231 of the electrode assembly 23, allowing the sidewall 231 of the electrode assembly 23 to promptly compress and deform the buffer body 120 during swelling, effectively mitigating the swelling force of the sidewall 231 of the electrode assembly 23, and better reducing the risk of wrinkling and lithium precipitation in the electrode assembly 23.

In another embodiment of the present application, as shown in FIGs. 7 to 9, a surface of the insulating body 110 of the provided battery cell 20 facing away from the electrode assembly 23 is connected to the buffer body 120.

In the battery cell 20 of the embodiments of the present application, the surface of the insulating body 110 facing away from the electrode assembly 23 is connected to the buffer body 120, meaning the buffer body 120 is located between the housing 21 and the insulating body 110. During the swelling of the sidewall 231 of the electrode assembly 23, the sidewall 231 of the electrode assembly 23 pushes the insulating body 110 to compress and deform the buffer body 120, thereby reducing the risk of wrinkling and lithium precipitation in the electrode assembly 23.

In another embodiment of the present application, as shown in FIGs. 7 to 9, both the surface of the insulating body 110 of the provided battery cell 20 facing away from the electrode assembly 23 and the surface facing the electrode assembly 23 are connected to the buffer body 120.

In the battery cell 20 of the embodiments of the present application, both opposite surfaces of the insulating body 110 are provided with buffer bodies 120, and the two buffer bodies 120 provide a better effect in mitigating the swelling force of the electrode assembly 23, further reducing the risk of wrinkling and lithium precipitation in the electrode assembly 23.

In another embodiment of the present application, the buffer body 120 and the insulating body 110 of the provided battery cell 20 form an integrated structure.

The buffer body 120 and the insulating body 110 forming an integrated structure can be understood as follows: the buffer body 120 and the insulating body 110 may be made of the same material and manufactured as an integrated structure using an integrated molding process such as injection molding or 3D printing. This results in a simple manufacturing process for the insulator 100, facilitating straightforward processing and manufacturing. The connection reliability between the buffer body 120 and the insulating body 110 is high, which is conducive to improving the cycling performance of the battery cell.

In another embodiment of the present application, the buffer body 120 and the insulating body 110 of the provided battery cell 20 are adhered.

Adhesion refers to the method of connecting the buffer body 120 and the insulating body 110 using an adhesive, where the adhesive may be glue or similar materials.

In the battery cell 20 of the embodiments of the present application, the buffer body 120 and the insulating body 110 are adhered, resulting in a simple connection operation, facilitating straightforward processing and manufacturing.

In another embodiment of the present application, the buffer body 120 and the insulating body 110 of the provided battery cell 20 are connected by thermal pressing.

Thermal pressing refers to a method of connecting the buffer body 120 and the insulating body 110 to form an integral structure by heating and melting the buffer body 120, the insulating body 110, or an adhesive between the buffer body 120 and the insulating body 110.

In the battery cell 20 of the embodiments of the present application, the buffer body 120 and the insulating body 110 are connected by thermal pressing, resulting in a simple connection method, facilitating straightforward processing and manufacturing.

The following lists some embodiments to better illustrate the present application.

In one embodiment, as shown in FIG. 3, the battery cell 20 includes a housing 21, an electrode assembly 23, and an insulator 100. The housing 21 includes an end cover 212 and a shell 211 that are mutually covered, the end cover 212 and the shell 211 forming a mounting cavity 2111. The insulator 100 envelops the electrode assembly 23, and both the electrode assembly 23 and the insulator 100 are installed in the mounting cavity 2111. The end cover 212 covers the opening of the shell 211 to encapsulate the electrode assembly 23 and the insulator 100 within the mounting cavity 2111.

As shown in FIG. 4, the electrode assembly 23 is wound into a sheet shape, and the insulator 100, after enveloping the electrode assembly 23, forms a cuboidal boxshaped structure. The front wall surface and rear wall surface of the electrode assembly 23 are large faces 2311, the left wall surface and right wall surface are side faces 2312, the lower wall surface is the bottom face 232, and the upper wall surface is the top face 233. The insulating body 110 is made from a single piece of soft insulating material, which, after folding, envelops the electrode assembly 23, and can also be unfolded into a sheet shape.

As shown in FIG. 5, when the insulator 100 envelops the electrode assembly 23, the front wall and rear wall of the insulating body 110 are large-face regions 111, and the left wall and right wall are side-face regions 112. The bottom wall of the insulating body 110 is the bottom-face region 113, and the top wall is the top-face region 114. The two large-face regions 111 respectively cover the two large faces 2311, the two side-face regions 112 cover the two side faces 2312, and the bottom-face region 113 covers the bottom face 232 of the electrode assembly 23, thereby achieving insulated envelopment of the electrode assembly 23. The top-face region 114 forms a ring-shaped structure covering the periphery of the top face 233 and is thermally bonded to the periphery of the lower surface of the end cover 212, fixing the insulator 100.

As shown in FIG. 6, when the insulator 100 is unfolded, the two large-face regions 111 are respectively connected to the front and rear edges of the bottom-face region 113. The side-face region 112 includes two side-face portions 1121, with the two side-face portions 1121 of one side-face region 112 connected to the left edges of the two large-face regions 111, and the two side-face portions 1121 of the other side-face region 112 connected to the right edges of the two large-face regions 111. The top-face region 114 includes a first top-face portion 1141 and a second top-face portion 1142. The front edges of the front side-face portions 1121 are each connected to a second top-face portion 1142, the rear edges of the rear side-face portions 1121 are each connected to a second top-face portion 1142, and the edges of the two large-face regions 111 facing away from the bottom-face region 113 are each connected to a first top-face portion 1141. The side-face portion 1121 is provided with a second through-hole 11211, and the bottom-face region 113 is provided with a third through-hole 11311, both of which are circular holes, regular in shape and easy to process. Large-face buffer portions 121 are adhered to both the upper and lower surfaces of the two large-face regions 111, providing two layers of large-face buffer portions 121 for buffering the large face 2311, resulting in a good buffering effect and a long cycle life for the electrode assembly 23.

In another embodiment, as shown in FIG. 10, a surface of the large-face buffer portion 121 facing away from the large-face region 111 is configured with an arcuate surface 1211 concave toward the large-face region 111, which can fit with the large face 2311, thereby better mitigating the swelling force of the large face 2311.

In another embodiment, as shown in FIG. 11, the insulator 100 is provided with a first through-hole 1111 penetrating the large-face region 111 and the large-face buffer portion 121, enabling an electrolyte to flow to the large face 2311 for replenishment. The arcuate surface 1211 can fit with the large face 2311, thereby better mitigating the swelling force of the large face 2311.

In another embodiment, as shown in FIGs. 15 to 17, four electrode assemblies 23 are enveloped within the insulator 100. The surface of the large-face region 111 facing the electrode assembly 23 is connected to a large-face buffer portion 121, and one intermediate buffer portion 123 is sandwiched between each pair of adjacent electrode assemblies 23. The three intermediate buffer portions 123 are arranged spaced from left to right, with the lower edges of the three intermediate buffer portions 123 connected to the bottom-face region 113, forming an integral structure with the insulating body 110 and the intermediate buffer portions 123, which is simple and easy to process and manufacture.

In another embodiment, as shown in FIG. 18, two electrode assemblies 23 are enveloped within the insulator 100. The surface of the large-face region 111 facing the electrode assembly 23 is connected to a large-face buffer portion 121, and one intermediate buffer portion 123 is sandwiched between the two adjacent electrode assemblies 23. The lower edge of the intermediate buffer portion 123 is connected to the bottom-face region 113, forming an integral structure with the insulating body 110 and the intermediate buffer portion 123, which is simple and easy to process and manufacture.

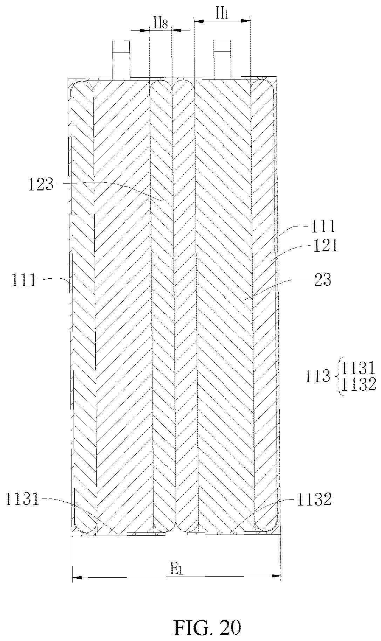

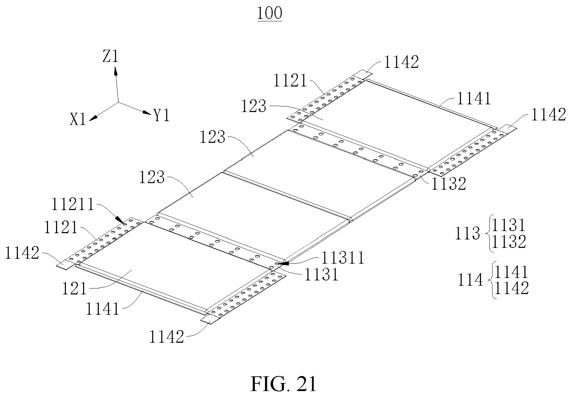

In another embodiment, as shown in FIGs. 19 and 20, two electrode assemblies 23 are enveloped within the insulator 100. The surface of the large-face region 111 facing the electrode assembly 23 is connected to a large-face buffer portion 121, two intermediate buffer portions 123 are sandwiched between the two adjacent electrode assemblies 23, and the two intermediate buffer portions 123 are stacked from left to right. The upper edges of the two intermediate buffer portions 123 are connected, and the bottom-face region 113 is divided in the middle to form a first insulating portion 1131 and a second insulating portion 1132. The two intermediate buffer portions 123 are located between the first insulating portion 1131 and the second insulating portion 1132, with a lower edge of the left intermediate buffer portion 123 connected to a right edge of the first insulating portion 1131, and a lower edge of the right intermediate buffer portion 123 connected to a left edge of the second insulating portion 1132. When the insulator 100 is unfolded, as shown in FIG. 21, the first insulating portion 1131 and the second insulating portion 1132 are capable of moving away from each other, allowing the two intermediate buffer portions 123 to unfold, and the entire insulator 100 to unfold into a sheet shape, facilitating storage and accommodation.

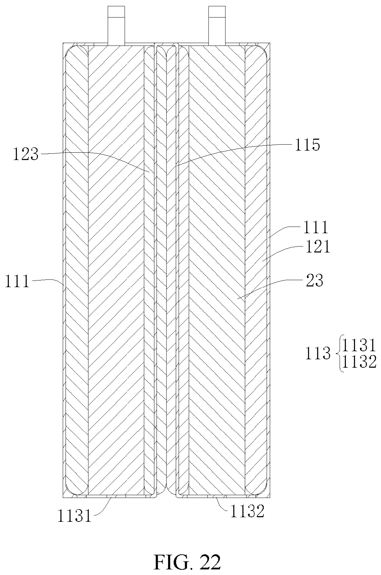

In another embodiment, as shown in FIG. 22, two electrode assemblies 23 are enveloped within the insulator 100. The surface of the large-face region 111 facing the electrode assembly 23 is connected to a large-face buffer portion 121, and four intermediate buffer portions 123 are sandwiched between the two adjacent electrode assemblies 23. The bottom-face region 113 includes a first insulating portion 1131 and a second insulating portion 1132, and the insulating body 110 further includes two third insulating portions 115 extending between the two adjacent electrode assemblies 23, stacked left to right. The four intermediate buffer portions 123 are respectively connected to the left-side and right-side faces 2312 of the two third insulating portions 115, allowing the two adjacent electrode assemblies 23 to be buffered by the four intermediate buffer portions 123, effectively mitigating the swelling force of the electrode assembly 23. The lower edge of the left third insulating portion 115 is connected to the right edge of the first insulating portion 1131, the lower edge of the right third insulating portion 115 is connected to the left edge of the second insulating portion 1132, and the upper edges of the two third insulating portions 115 are connected. When the insulator 100 is unfolded, the first insulating portion 1131 and the second insulating portion 1132 are capable of moving away from each other, allowing the two third insulating portions 115 to unfold, driving the intermediate buffer portions 123 to unfold, and the entire insulator 100 to unfold into a sheet shape, facilitating storage and accommodation.

In another embodiment, as shown in FIGs. 13 and 14, when the insulator 100 is unfolded, the two large-face regions 111 are respectively connected to the front and rear edges of the bottom-face region 113, with one side-face region 112 connected to the right edge of the front large-face region 111, and the other side-face region 112 connected to the left edge of the rear large-face region 111. A front edge of the front side-face region 112 is connected to a second top-face portion 1142, a rear edge of the rear side-face region 112 is connected to a second top-face region 114, and the edges of the two large-face regions 111 facing away from each other are each connected to a first top-face portion 1141. An upper surface of the side-face region 112 is connected to a side-face buffer portion 122, and the side-face buffer portion 122 is configured with an accommodating groove 11212. The accommodating groove 11212 is an arc-shaped groove, with its shape adapted to the arc-shaped side face 2312 of the electrode assembly 23. The side-face region 112 and the side-face buffer portion 122 each are provided with a second through-hole 11211, and the bottom-face region 113 is provided with a third through-hole 11311, both of which are circular holes, regular in shape and easy to process.

In another embodiment of the present application, a battery 1100 is provided, including the above-described battery cell 20.

In the battery 1100 of the embodiments of the present application, the above-described battery cell 20 is adopted, which has high reliability and cycle life, beneficial to improving the service life and performance of the battery 1100. Additionally, the high production efficiency of the battery cell 20 helps to reduce the manufacturing cost of the battery 1100.

Since the battery 1100 of the embodiments of the present application may adopt the technical solutions of any one or a combination of the above embodiments, it similarly possesses the beneficial effects brought by the technical solutions of the above embodiments, which are not repeated herein.

In another embodiment of the present application, an electric apparatus is provided, including the above-described battery 1100.

In the electric apparatus of the embodiments of the present application, the above-described battery 1100 is adopted, which has a long service life, beneficial to improving the performance of the electric apparatus. Additionally, the low manufacturing cost of the battery 1100 helps to reduce the manufacturing cost of the electric apparatus.

Since the electric apparatus of the embodiments of the present application may adopt the technical solutions of any one or a combination of the above embodiments, it similarly possesses the beneficial effects brought by the technical solutions of the above embodiments, which are not repeated herein.

The descriptions of the various embodiments above tend to emphasize the differences between the embodiments, and their similarities or commonalities may be cross-referenced. For brevity, these are not repeated herein.

The above are merely preferred embodiments of the present application and are not intended to limit the present application. Any modifications, equivalent substitutions, improvements, and the like made within the spirit and principles of the present application shall be included within the scope of protection of the present application.

## Claims

1. A battery cell, **characterized by** comprising:
a housing having a mounting cavity;
an electrode assembly disposed in the mounting cavity; and
an insulator comprising a buffer body and an insulating body that are disposed in the mounting cavity, wherein the insulating body envelops the electrode assembly, and the buffer body is located between the electrode assembly and the housing;
wherein the buffer body and the insulating body are connected to form an integral structure.

2. The battery cell according to claim 1, **characterized in that** the buffer body is disposed between the housing and a sidewall of the electrode assembly.

3. The battery cell according to claim 2, **characterized in that** the sidewall of the electrode assembly comprises a large face, the buffer body comprises a large-face buffer portion, and the large-face buffer portion covers the large face.

4. The battery cell according to claim 3, **characterized in that** an area of the large face is S₁, an area of the large-face buffer portion is S₂, and 0.8S₁; ≤ S₂ ≤ 1.05S₁.

5. The battery cell according to claim 3 or 4, **characterized in that** a thickness of the electrode assembly is H₁, a thickness of the large-face buffer portion is H₂, and 0.05 mm ≤ H₂ ≤ 0.6H₁.

6. The battery cell according to any one of claims 3 to 5, **characterized in that** 0.2 mm ≤ H₂ ≤ 0.3H₁.

7. The battery cell according to any one of claims 3 to 6, **characterized in that** a surface of the large-face buffer portion facing the large face is configured with an arcuate surface for fitting with the large face.

8. The battery cell according to any one of claims 3 to 7, **characterized in that** under a condition that a pressure P is applied along a thickness direction of the large-face buffer portion, a thickness deformation amount of the large-face buffer portion is a, a thickness of the large-face buffer portion before being subjected to the pressure is b, and c = a/b, wherein when 0.001 MPa ≤ P ≤ 0.05 MPa, 0.5% ≤ c ≤ 60%; and when P ≥ 1.2 MPa, c ≥ 80%.

9. The battery cell according to any one of claims 3 to 8, **characterized in that** the insulating body comprises a large-face region, the large-face region covers the large face, and the large-face buffer portion is connected to the large-face region.

10. The battery cell according to claim 9, **characterized in that** the insulator is configured with first through-holes penetrating the large-face region and the large-face buffer portion, the first through-holes enabling an electrolyte to flow to the large face.

11. The battery cell according to claim 10, **characterized in that** the number of the first through-holes is N₁, a cross-sectional area of the first through-holes is S₃, an area of the large-face buffer portion is S₂, and N₁×S₃ ≤ 0.1S₂.

12. The battery cell according to any one of claims 3 to 11, **characterized in that** the sidewall of the electrode assembly further comprises a side face adjacent to the large face, the buffer body further comprises a side-face buffer portion, and the side-face buffer portion covers the side face.

13. The battery cell according to claim 12, **characterized in that** a surface of the side-face buffer portion facing the side face is configured with an accommodating groove for accommodating the side face, and a groove wall of the accommodating groove is capable of fitting with the side face.

14. The battery cell according to claim 12 or 13, **characterized in that** a thickness of the large-face buffer portion is greater than a thickness of the side-face buffer portion.

15. The battery cell according to any one of claims 12 to 14, **characterized in that** the insulating body further comprises a side-face region, the side-face region covers the side face, and the side-face buffer portion is connected to the side-face region.

16. The battery cell according to any one of claims 3 to 15, **characterized in that** the sidewall of the electrode assembly comprises two side faces, the large face is provided in two, the two large faces are located on opposite sides of the electrode assembly, and the two side faces are located on another pair of opposite sides of the electrode assembly; and
the insulating body further comprises a bottom-face region and two side-face regions, the large-face region is provided in two, the two large-face regions respectively cover the two large faces, the two side-face regions respectively cover the two side faces, and the bottom-face region covers a bottom face of the electrode assembly.

17. The battery cell according to claim 16, **characterized in that** a width of the side-face region is E₁, a thickness of the electrode assembly is H₁, the number of the electrode assemblies enveloped within the insulating body is N₂, a sum of thicknesses of all the large-face buffer portions located between the two large-face regions is A; a thickness of the large-face region is H₃, and N₂×H₁ < E₁ ≤ 1.05×N₂×H₁ + A + 2H₃; or
when N₂ ≥ 2, the buffer body further comprises intermediate buffer portions, with each intermediate buffer portion located between two adjacent electrode assemblies, and a sum of thicknesses of all the intermediate buffer portions is B, wherein N₂×H₁ < E₁ ≤ 1.05×N₂×H₁ + A + B + 2H₃.

18. The battery cell according to claim 16 or 17, **characterized in that** a length of the bottom-face region is E₂, a width of the electrode assembly is L₁, a thickness of the side-face region is H₄, and L₁ < E₂ ≤ 1.05L₁ + 2H₄.

19. The battery cell according to any one of claims 16 to 18, **characterized in that** the housing comprises a shell and an end cover, the end cover covering an opening of the shell and forming the mounting cavity together with the shell; and
the insulating body further comprises a first top-face portion configured to connect with the end cover and connect with the large-face region, wherein the number of the electrode assemblies enveloped within the insulating body is N₂, a width of the first top-face portion is E₃, a thickness of the electrode assembly is H₁, and 0.1 ×N₂×H₁ ≤ E₃ ≤ 0.5×N₂×H₁.

20. The battery cell according to any one of claims 16 to 19, **characterized in that** at least one of the bottom-face region, the side-face region, and the large-face region is covered with a functional layer for enhancing the performance of the battery cell.

21. The battery cell according to claim 20, **characterized in that** the functional layer comprises a thermally conductive layer, the thermally conductive layer covering the bottom-face region; and/or the thermally conductive layer covering the large-face region.

22. The battery cell according to claim 20, **characterized in that** the functional layer further comprises a thermal insulation layer, the thermal insulation layer covering the large-face layer.

23. The battery cell according to any one of claims 16 to 22, **characterized in that** the side-face region is configured with second through-holes, the second through-holes enabling an electrolyte to flow to the side face; and/or
the bottom-face region is configured with third through-holes, the third through-holes enabling an electrolyte to flow to the bottom face of the electrode assembly.

24. The battery cell according to any one of claims 1 to 23, **characterized in that** the buffer body further comprises an intermediate buffer portion, the number of electrode assemblies is multiple, the multiple electrode assemblies are stacked along a thickness direction of the electrode assembly to form an electrode module, the insulating body envelops the electrode module, and the intermediate buffer portion is disposed between two adjacent electrode assemblies.

25. The battery cell according to claim 24, **characterized in that** at least one edge of the intermediate buffer portion is connected to the insulating body.

26. The battery cell according to claim 24 or 25, **characterized in that** multiple intermediate buffer portions are disposed between two adjacent electrode assemblies, and the multiple intermediate buffer portions are stacked along the thickness direction of the electrode assembly.

27. The battery cell according to claim 26, **characterized in that** the intermediate buffer portions are sequentially connected such that the stacked multiple intermediate buffer portions are capable of being unfolded;
the insulating body comprises a first insulating portion and a second insulating portion, the first insulating portion and the second insulating portion respectively covering two adjacent electrode assemblies; and
when the multiple intermediate buffer portions are in an unfolded state, a first one of the intermediate buffer portions is connected to the first insulating portion, a last one of the intermediate buffer portions is connected to the second insulating portion, and the first insulating portion and the second insulating portion are capable of moving away from each other as the multiple intermediate buffer portions are unfolded.

28. The battery cell according to any one of claims 24 to 26, **characterized in that** the insulating body comprises multiple third insulating portions located between two adjacent electrode assemblies, the multiple third insulating portions are stacked along the thickness direction of the electrode assembly; the third insulating portions are sequentially connected such that the stacked multiple third insulating portions are capable of being unfolded; and at least one of the third insulating portions is connected to the intermediate buffer portion.

29. The battery cell according to any one of claims 1 to 28, **characterized in that** a surface of the insulating body facing the electrode assembly is connected to the buffer body; and/or a surface of the insulating body facing away from the electrode assembly is connected to the buffer body.

30. The battery cell according to any one of claims 1 to 29, **characterized in that** the buffer body and the insulating body form an integrated structure; or the buffer body is adhered to the insulating body; or the buffer body is connected to the insulating body by thermal pressing.

31. A battery, **characterized by** comprising the battery cell according to any one of claims 1 to 30.

32. An electric apparatus, **characterized by** comprising the battery according to claim 31.
